# EUROPEAN PATENT SPECIFICATION

(11) **EP 2 843 657 B1**
(45) Date of publication and mention of the grant of the patent: **07.12.2016**
(21) Application number: 14182741.0
(22) Date of filing: 29.08.2014
(51) Int. Cl.: G10L 15/26, E03C 1/05, G05D 7/06, G10L 15/30, G10L 15/22

(54) **Equipment control method and speech-based equipment control system**
Anlagensteuerungsverfahren und sprachbasiertes Anlagesteuerungssystem
Procédé de commande d'équipement et système de commande d'équipement à commande vocale

(30) Priority: 03.09.2013 US 201361873133 P; 02.07.2014 JP 2014137102
(43) Date of publication of application: 04.03.2015
(73) Proprietor: Panasonic Intellectual Property Corporation of America, Torrance, CA 90503 (US)
(72) Inventor: Yamagami, Katsuyoshi, Osaki-shi, Osaka 540-6207 (JP)
(74) Representative: Grünecker Patent- und Rechtsanwälte PartG mbB

(56) References cited:
- WO-A2-2012/045417
- GB-A- 2 302 188

## Description

### BACKGROUND OF THE INVENTION

### 1. Field of the Invention

The present disclosure relates to technology that controls equipment according to human speech.

### 2. Description of the Related Art

Recently, advances in speech recognition technology have led to investigation of speech-based equipment control systems that not only conduct ON and OFF control of various equipment, but also enable positioning instructions to be executed.

For example, Japanese Unexamined Patent Application Publication (Translation of PCT Application) No. 2005-506175 discloses a handheld pipette that interpret a spoken command, generates an electromagnetic driving signal, and according to this electromagnetic driving signal, drives a driving motor mechanically coupled to one end of a stopping member.

WO 2012045417 discloses an electronic pipette comprising an electrically driven unit for pipetting and an operating and/or display unit; wherein a device module comprises the unit for pipetting, an operating and/or display module physically separate from the device module completely or partially comprises the operating and/or display unit, and means are provided for wireless communication between the device module and the operating and/or display module. The operating and/or display module has switches and/or keys and/or a keyboard and/or a microphone and/or a screen and/or a touch-sensitive screen and/or a loudspeaker and/or an acoustic signal generator.

GB 2302188 A discloses an oven integrating an integral speech-generating unit which, in use, enables the oven to give audio information in speech form to the user. The oven's operation and speech-generating unit are, at least partially, actuable using audio (i.e. vocal) commands.

### SUMMARY OF THE INVENTION

It is an objective of the present invention to provide for speech-based equipment control systems that not only conduct ON and OFF control of various equipment, but also enable complex instructions to be executed.

This objective is achieved by the features as set forth in the independent claims. Further advantageous embodiments to the present invention are set forth in the dependent claims.

In one general aspect, the techniques disclosed here feature a method for controlling a supply device according to a user's speech in a speech-based equipment control system. The system periodically updates a current quantity of a material that has already been supplied, and ascertains an already-supplied quantity. A first specific quantity is stored in the system, which is a quantity of the prescribed material to be supplied as designated by a user using speech. The instruction is received to change the first specific quantity to a second specific quantity, and if the second specific quantity is greater than the already-supplied quantity at the current time, the prescribed material is supplied until the already-supplied quantity reaches the second specific quantity.

These general and specific aspects may be implemented using a system, a method, and a computer program, and any combination of systems, methods, and computer programs.

According to the above aspect, further improvements may be realized.

### BRIEF DESCRIPTION OF THE DRAWINGS

FIG. 1 is a diagram illustrating a configuration of a speech-based equipment control system according to Embodiment 1;
FIG. 2 is a block diagram illustrating a configuration in the case of applying a speech-based equipment control system according to Embodiment 1 to a speech-based flow control system;
FIG. 3 is a schematic diagram of a sink equipped with a speech-based flow control system according to Embodiment 1;
FIG. 4 is a diagram illustrating an example of a monitor screen displayed by an output unit;
FIG. 5 is a flowchart illustrating operations of a speech-based flow control system according to Embodiment 1;
FIG. 6 is a diagram illustrating a data structure of a correspondence table according to Embodiment 1;
FIG. 7 is a schematic diagram illustrating a first operating example;
FIG. 8 is a schematic diagram illustrating a first operating example;
FIG. 9 is a schematic diagram illustrating a second operating example;
FIG. 10 is a schematic diagram illustrating a second operating example;
FIG. 11 is a schematic diagram illustrating a second operating example;
FIG. 12 is a schematic diagram illustrating a second operating example;
FIG. 13 is a sequence diagram for the speech-based flow control system illustrated in FIG. 2;
FIG. 14 is a flowchart of an exemplary modification of the flowchart illustrated in FIG. 5;
FIG. 15 is a flowchart of an exemplary modification of the flowchart illustrated in FIG. 5;
FIG. 16 is a flowchart illustrating a determination process by a server for determining whether or not a current water volume has reached a target water volume;
FIG. 17 is a diagram illustrating an example of a management table;
FIG. 18 is a diagram illustrating an example of an error screen;
FIG. 19 is a block diagram illustrating a configuration in the case of applying a speech-based equipment control system according to Embodiment 2 to a speech-based heating control system;
FIG. 20 is a flowchart illustrating operations of a speech-based heating control system according to Embodiment 2;
FIG. 21 is a diagram illustrating an example of a data structure of a correspondence table according to Embodiment 2;
FIG. 22A is a diagram illustrating an overview of a service provided by a speech-based equipment control system according to an embodiment;
FIG. 22B is a diagram illustrating an example in which an equipment manufacturer corresponds to a data center operating company;
FIG. 22C is a diagram illustrating an example in which either or both of an equipment manufacturer and a management company correspond to a data center operating company;
FIG. 23 is a diagram illustrating an overview of a service provided by a home appliance control system according to a service category 1 (a cloud service with a self-managed data center);
FIG. 24 is a diagram illustrating an overview of a service provided by a home appliance control system according to a service category 2 (a cloud service utilizing IaaS);
FIG. 25 is a diagram illustrating an overview of a service provided by a home appliance control system according to a service category 3 (a cloud service utilizing PaaS); and
FIG. 26 is a diagram illustrating an overview of a service provided by a home appliance control system according to a service category 4 (a cloud service utilizing SaaS).

### DESCRIPTION OF THE PREFERRED EMBODIMENTS

### (Findings that form the basis of the invention)

If speech is used to give an operating instruction to designated equipment, it is conceivable that a mistake in the instruction may occur due to misspeaking_, for example. Also, even if an instruction is correctly transmitted to the equipment using speech, cases in which the user realizes partway through that the instruction content is mistaken are also conceivable. In such cases, if the control is a simple ON/OFF control, for example, the user may simply give a new instruction to the equipment.

However, suppose that the user has instructed a microwave oven to heat food for "3 minutes", for example. At this point, suppose that after "2 minutes" of heating has elapsed, the user realizes that the food should be heated for "5 minutes". In this case, if the user aborts the operation of the equipment for the "3 minutes" instruction and gives the equipment a new instruction for "5 minutes", the food will be heated by the microwave oven for a total of "7 minutes". Since the heating time is an important element of cooking, there is an increased possibility that this behavior may result in a cooking failure.

As another example, a similar case may occur when instructing a water filter or the like to pour "400 cc" of water, and then changing the instruction to "700 cc" partway through.

In other words, there is a problem in that, in the case of executing an operation that designates a physical quantity with respect to equipment, if the designated physical quantity is changed partway through the operation, the physical quantity desired by the user may not be provided.

Note that the above Japanese Unexamined Patent Application Publication (Translation of PCT Application) No. 2005-506175 only describes speech being used simply in order to adjust the position of a stopping member that prescribes a stroke range of a piston, whereas there is no disclosure regarding how to configure a target position of the stopping member using speech. Consequently, there is no consideration of problems like the above.

Accordingly, the present inventors investigated the following improvements in order to improve the functionality of a speech-based equipment control system.
(1) A method according to an aspect of the present disclosure is a method for controlling a supply device according to a user's speech in a speech-based equipment control system including a speech input device that inputs speech and the supply device controlling supply of a prescribed material, the method including: receiving, from a user of the supply device via the speech input device, first speech information that expresses a supply instruction causing the supply device to supply the prescribed material of a first specific quantity; transmitting to the supply device a first control command for executing a first supply process that supplies the prescribed material of the first specific quantity recognized on the basis of the first speech information; in a case of receiving second speech information expressing a supply instruction causing the supply device to supply the prescribed material of a second specific quantity different from the first specific quantity from the user of the supply device via the speech input device before the first supply process is complete in the supply device, detecting an already-supplied quantity indicating a quantity of the prescribed material that has already been supplied at the time of receiving the second speech information, and comparing the detected already-supplied quantity to a second specific quantity recognized on the basis of the second speech information; and if the second specific quantity is judged to be greater than the already-supplied quantity, transmitting to the supply device a second control command for aborting the first supply process and executing a second supply process that supplies the prescribed material until the already-supplied quantity reaches the second specific quantity.
   In this case, first, if a user speaks to designate a first specific quantity, a first supply process that supplies prescribed material of the first specific quantity is started by the supply device. Subsequently, if the user speaks to designate a second specific quantity during execution of the first supply process, an already-supplied quantity of the prescribed material at that time is detected. If the second specific quantity is greater than the already-supplied quantity, a second supply process that supplies the prescribed material until the already-supplied quantity reaches the second specific quantity is executed.
   In this way, in this aspect, if a first specific quantity is changed to a second specific quantity during execution of a first supply process, the supply process ends when the already-supplied quantity of prescribed material reaches the second specific quantity. For this reason, when the user changes the quantity of prescribed material to supply from a first specific quantity to a second specific quantity, the prescribed material of the second specific quantity is obtained without performing the laborious work of calculating the difference between the already-supplied quantity and the second specific quantity, and designating that difference.
   Herein, the material envisioned by this aspect has a property in which the already-supplied quantity is irreversible. For this reason, if the already-supplied quantity exceeds the second specific quantity at the time of inputting the instruction to change the quantity of prescribed material to supply from the first specific quantity to the second specific quantity, it is not possible to make the already-supplied quantity reach the second specific quantity. Consequently, in this aspect, the second supply process is conducted if a condition is satisfied. The condition stipulates that the already-supplied quantity at the time of the change does not exceed the second specific quantity. As a result, it is possible to suitably distinguish cases in which making the quantity of prescribed material to supply reach the second specific quantity is not possible.
   Also, this aspect enables the specific quantity to be changed using speech, and thus is useful in situations where the user's hands are occupied.
(2) In the above aspect, if the second specific quantity is judged to be less than the already-supplied quantity, an error message indicating that the second supply process cannot be executed may be reported to the user of the supply device.
   In this aspect, if the already-supplied quantity exceeds the second specific quantity at the time when the change is instructed, an error message indicating that the second supply process cannot be executed is reported to the user. For this reason, the user is able to recognize that the second supply process cannot be executed because the condition is not satisfied.
(3) In the above aspect, the speech-based equipment control system may further include a display device, and the error message may be displayed on the display device.
   In this aspect, since the error message is displayed on a display, the user is able to visually recognize that the already-supplied quantity exceeds the second specific quantity at the time when the change is instructed.
(4) In the above aspect, the speech-based equipment control system may further include a speech output device configured to output speech, and the error message may be reported to the user of the supply device using the speech output device.
   In this aspect, since the error message is reported using a speech output device, the user is able to aurally recognize that the already-supplied quantity exceeds the second specific quantity at the time when the change is instructed.
(5) In the above aspect, if the already-supplied quantity and the second specific quantity are the same, a third control command for stopping a supply process of the prescribed material based on the first control command may be transmitted to the supply device.
   In this aspect, the supply process is stopped if the already-supplied quantity has already reached the second specific quantity at the time when the change is instructed, and thus the user rapidly obtains the prescribed material of the second specific quantity.
(6) In the above aspect, the prescribed material may be a liquid.
   In this case, the user is able to change the quantity to supply from a first specific quantity to a second specific quantity without performing the laborious work discussed above for a liquid cooking ingredient such as water, soy sauce, or vinegar, or a liquid such as gasoline.
(7) In the above aspect, the prescribed material may also be a powdered or granular material.
   In this case, the user is able to change the quantity to supply from a first specific quantity to a second specific quantity without performing the laborious work discussed above for a powdered material such as sugar or salt, or a granular material such as medicine.
(8) In the above aspect, the prescribed material may be a material in a paste-like form.
   In this case, the user is able to change the quantity to supply from a first specific quantity to a second specific quantity without performing the laborious work discussed above for a material in a paste-like form, such as miso.
(9) In the above aspect, the supply device may be a faucet device, and the prescribed material may be water.
   In this case, the user is able to change the quantity to supply from a first specific quantity to a second specific quantity without performing the laborious work discussed above for water.
(10) In the above aspect, during the first supply process, the supply device may measure a cumulative supply quantity of the prescribed material supplied by the first supply process, and the already-supplied quantity may be detected on the basis of the cumulative supply quantity received from the supply device.
   In this case, since a cumulative supply quantity of the prescribed material is continuously measured during the first supply process, the already-supplied quantity of prescribed material at the time when the change is instructed may be accurately detected.
(13) A method according to another aspect of the present disclosure is a method for controlling electric equipment according to a user's speech in a speech-based equipment control system including a speech input device that inputs speech and electric equipment operating according to a designated operating time, the method including: receiving, from a user of the electric equipment via the speech input device, first speech information that expresses an operating instruction causing the electric equipment to operate for a first operating time; transmitting to the electric equipment a first control command for executing a first operating process that causes the electric equipment to operate for the first operating time recognized on the basis of the first speech information; in a case of receiving second speech information expressing an operating instruction causing the electric equipment to operate for a second operating time different from the first operating time from the user of the electric equipment via the speech input device before the first operating process is complete in the electric equipment, detecting an elapsed operating time of the electric equipment at the time of receiving the second speech information, and comparing the detected elapsed operating time to a second operating time recognized on the basis of the second speech information; and if the second operating time is judged to be greater than the elapsed operating time, transmitting to the electric equipment a second control command for aborting the first operating process and executing a second operating process that causes the electric equipment to operate until the elapsed operating time reaches the second operating time.

In this case, first, if a user speaks to give a spoken instruction causing the electric equipment to operate for a first operating time, a first operating process that causes the electric equipment to operate for the first operating time is started by the electric equipment. Subsequently, if the user speaks to give a spoken instruction causing the electric equipment to operate for a second operating time during execution of the first operating process, an elapsed operating time at that time is detected. If the second operating time is greater than the elapsed operating time, a second operating process causing the electric equipment to operate until the elapsed operating time reaches the second operating time is executed.

In this way, in this aspect, if a first operating time is changed to a second operating time during execution of a first operating process, the operating process ends when the elapsed operating time reaches the second operating time. For this reason, when the user changes the operating time of the electric equipment from a first operating time to a second operating time, the electric equipment may be made to operate for the second operating time without performing the laborious work of calculating the difference between the elapsed operating time and the second operating time, and designating that difference.

Herein, the operating time of the electric equipment envisioned by this aspect has an irreversible property. For this reason, if the elapsed operating time exceeds the second operating time at the time of inputting the instruction to change the operating time from the first operating time to the second operating time, it is not possible to make the elapsed operating time reach the second operating time. Consequently, in this aspect, the second operating process is conducted if a condition is satisfied. The condition stipulates that the elapsed operating time at the time when the change is instructed does not exceed the second operating time. As a result, it is possible to suitably distinguish cases in which making the electric equipment operate for the second operating time is not possible.

Hereinafter, exemplary embodiments of the present disclosure will be described with reference to the drawings.

### (Embodiment 1)

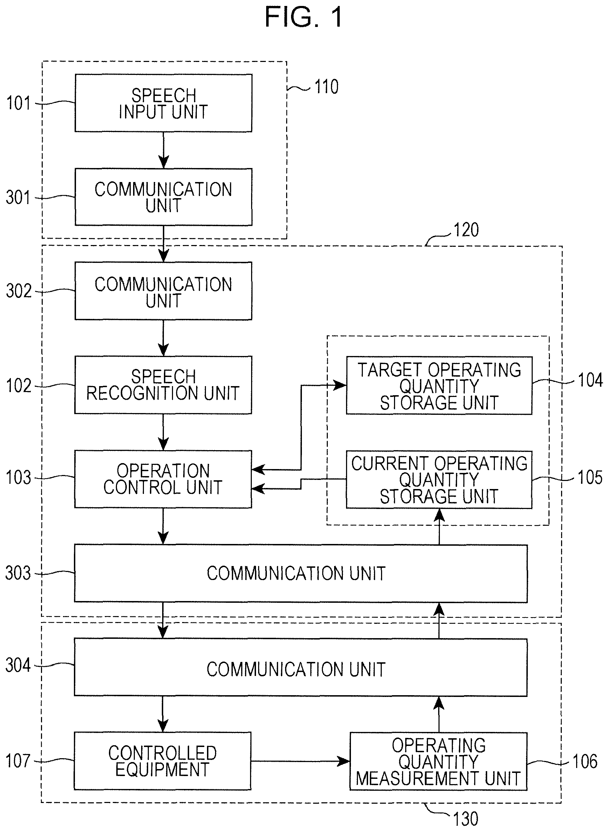

FIG. 1 is a diagram illustrating a configuration of a speech-based equipment control system according to Embodiment 1 of the present disclosure. The speech-based equipment control system includes a speech input device 110, a server 120, and a supply device 130. The speech input device 110 includes a speech input unit 101 and a communication unit 301.

The speech input unit 101 acquires first speech information that expresses a supply instruction causing the supply device 130 to supply prescribed material of a first specific quantity. Also, the speech input unit 101 acquires second speech information that expresses a supply instruction for supplying prescribed material of a second specific quantity that differs from the first specific quantity.

The communication unit 301 (an example of a first communication unit) transmits the first speech information and the second speech information acquired by the speech input unit 101 to the server 120.

The supply device 130 includes a communication unit 304, controlled equipment 107, and an operating quantity measurement unit 106.

The communication unit 304 (an example of a second communication unit) receives from the server 120 a first control command for executing a first supply process that supplies prescribed material of the first specific quantity recognized on the basis of the first speech information.

The controlled equipment 107 executes a supply process indicated by a first control command received by the communication unit 304.

The operating quantity measurement unit 106 periodically measures an already-supplied quantity, which is a quantity of the prescribed material supplied by the controlled equipment 107, and transmits the already-supplied quantity to the server 120 via the communication unit 304.

The server 120 includes communication units 302 and 303, a speech recognition unit 102, an operation control unit 103, a target operating quantity storage unit 104, and a current operating quantity storage unit 105.

The communication unit 302 (an example of a third communication unit) receives the first speech information and the second speech information from the speech input device 110.

The communication unit 303 (an example of a fourth communication unit and a fifth communication unit) transmits to the supply device 130 a first control command for executing a first supply process that supplies prescribed material of the first specific quantity recognized on the basis of the first speech information, and a second control command to be discussed later.

The operation control unit 103 is configured so that, in the case of receiving second speech information expressing a supply instruction causing the supply device 130 to supply prescribed material of a second specific quantity from the user via the speech input device 110 before the first supply process is complete in the supply device 130, the operation control unit 103 detects an already-supplied quantity indicating the quantity of prescribed material that has already been supplied at the time of receiving the second speech information. Herein, the operation control unit 103 detects the already-supplied quantity at the time of receiving the second speech information by retrieving the already-supplied quantity from the current operating quantity storage unit 105.

Additionally, the operation control unit 103 (an example of a judgment unit) compares the detected already-supplied quantity to the second specific quantity recognized on the basis of the second speech information, and judges which is greater. Subsequently, in the case of judging that the second specific quantity is greater than the already-supplied quantity, the operation control unit 103 substitutes the first specific quantity being stored in the target operating quantity storage unit 104 with the second specific quantity, and aborts the first supply process. The operation control unit 103 then transmits, to the supply device 130 via the communication unit 303, a second control command for executing a second supply process that supplies enough prescribed material for the already-supplied quantity to reach the second specific quantity.

When the communication unit 302 receives first speech information, the operation control unit 103 writes the first specific quantity in the target operating quantity storage unit 104. Also, the operation control unit 103 overwrites the first specific quantity with the second specific quantity in the target operating quantity storage unit 104.

The current operating quantity storage unit 105 stores a cumulative value of the supply quantity periodically measured by the operating quantity measurement unit 106.

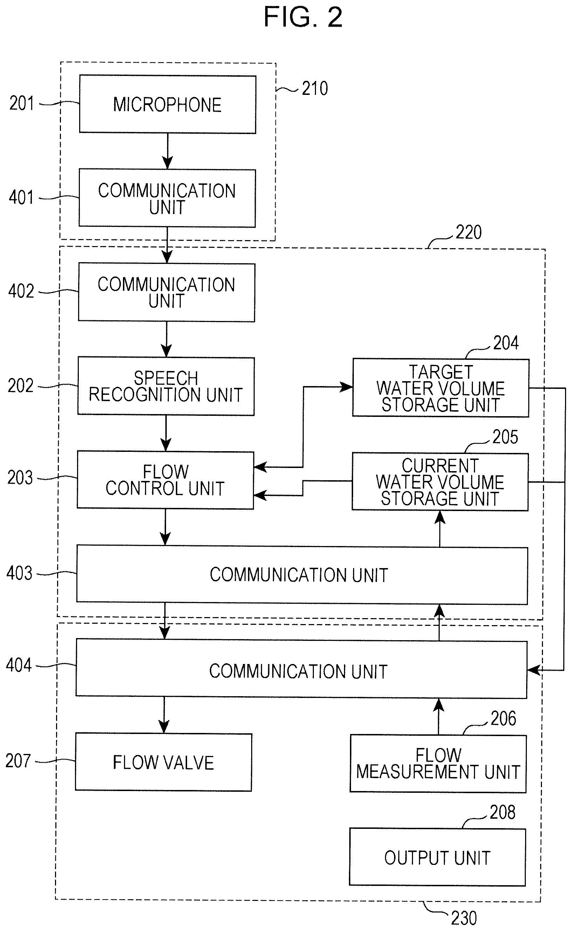

FIG. 2 is a block diagram illustrating a configuration in the case of applying a speech-based equipment control system according to Embodiment 1 of the present disclosure to a speech-based flow control system. The speech-based flow control system includes a speech input device 210 (corresponding to the speech input device 110, a server 220 (corresponding to the server 120, and water discharging equipment 230 (corresponding to the supply device 130).

The speech input device 210 includes a microphone 201 and a communication unit 401. The server 220 includes a speech recognition unit 202, a flow control unit 203, a target water volume storage unit 204, a current water volume storage unit 205, and communication units 402 and 403. The water discharging equipment 230 includes a flow measurement unit 206, a flow valve 207, an output unit 208, and a communication unit 404.

The speech input device 210 and the water discharging equipment 230 are installed inside a user's home. The server 220 is a cloud server installed on the Internet. Herein, the server 220 is managed by a commercial operator that provides a user with a service using the speech-based flow control system.

The speech input device 210 and the server 220 are communicably connected to each other via a network such as the Internet. The server 220 and the water discharging equipment 230 are also communicably connected to each other via a communication network such as the Internet.

The microphone 201 picks up speech spoken by a user, and converts the speech into a speech signal. The communication unit 401 is made up of a communication device that connects the speech input device 210 to the Internet, for example, and transmits a speech signal output from the microphone 201 to the server 220.

The communication unit 402 is made up of a communication device for connecting the server 220 to the Internet, for example. The communication unit 402 receives a speech signal transmitted from the speech input device 210, and outputs to the speech recognition unit 202.

The speech recognition unit 202 conducts a speech recognition process on a speech signal output from the communication unit 402, thereby converting the user's speech picked up by the microphone 201 into a string (spoken string).

The flow control unit 203 judges which operation instruction from among one or more prescribed flow control operation instructions is indicated by the user's spoken string converted by the speech recognition unit 202. In addition, the flow control unit 203 applies an open/close control to the flow valve 207 in accordance with the judged flow control operation instruction, and thereby executes control such as starting a flow of water, or stopping a flow of water. Specifically, in the case of judging that the user has input by speech an operation instruction for discharging a desired quantity of water (a target water volume), the flow control unit 203 stores that target water volume in the target water volume storage unit 204.

Furthermore, in the case of judging that the user has input by speech an operation instruction for starting the discharge of water, the flow control unit 203 outputs to the flow valve 207 an OPEN control signal for opening the flow valve 207, and causes the flow valve 207 to start discharging water. Furthermore, in the case of judging that the user has input by speech an operation instruction for stopping the discharge of water, the flow control unit 203 outputs to the flow valve 207 a CLOSE control signal for closing the flow valve 207, and causes the flow valve 207 to stop discharging water. In addition, the flow control unit 203 also periodically judges, for example, whether or not the discharged water volume at a given point in time (current water volume) stored in the current water volume storage unit 205 has reached the target water volume being stored in the target water volume storage unit 204. Subsequently, in the case of judging that the current water volume has not reached the target water volume, the flow control unit 203 does not output a CLOSE control signal to the flow valve 207, and continues the discharge of water. Conversely, in the case of judging that the current water volume has reached the target water volume, the flow control unit 203 outputs a CLOSE control signal to the flow valve 207, and stops the discharge of water. At this point, the timing at which the flow measurement unit 206 reports an increment that is reported every measurement interval may be adopted as the timing at which the flow control unit 203 periodically determines whether or not the target water volume has been reached, for example. In other words, the flow control unit 203 may judge whether or not the target water volume has been reached in synchronization with a measurement interval of the flow measurement unit 206. However, this is merely one example, and the flow control unit 203 may also judge whether or not the target water volume has been reached on a shorter time interval or a longer time interval than the measurement interval.

The target water volume storage unit 204 stores a target water volume designated by a user as discussed earlier. The current water volume storage unit 205 stores a cumulative value of the quantity of discharged water measured by the flow measurement unit 206 as the current water volume. Herein, if the flow measurement unit 206 reports an increment that is reported every measurement interval, for example, the current water volume storage unit 205 causes the flow control unit 203 to add the reported increment to the current water volume that is currently being stored, and updates the current water volume with the resulting value. For example, provided that S is the current water volume that is currently being stored, ΔS is the reported increment, and S' is the current water volume after being updated, the current water volume after being updated is computed as S' = S + ΔS.

The communication unit 403 is made up of a communication device that connects the server 220 to the Internet. The communication unit 403 transmits a control signal output from the flow control unit 203 to the flow valve 207 via a network, and in addition, receives an increment output from the flow measurement unit 206 via the network, and outputs the received increment to the current water volume storage unit 205. Furthermore, the communication unit 403 transmits the target water volume being stored in the target water volume storage unit 204 and the current water volume being stored in the current water volume storage unit 205 to the output unit 208. Herein, the communication unit 403 may transmit the target water volume and the current water volume to the output unit 208 if the target water volume and the current water volume are updated in the target water volume storage unit 204 and the current water volume storage unit 205.

The communication unit 404 is made up of a communication device that connects the water discharging equipment 230 to a network. The communication unit 404 receives a control signal transmitted from the communication unit 403, and in addition, transmits an increment output from the flow measurement unit 206 to the current water volume storage unit 205 via the network. Additionally, the communication unit 404 receives and outputs the target water volume and the current water volume to the output unit 208.

The flow measurement unit 206 is made up of a flow meter, for example. The flow measurement unit 206 measures the quantity of discharged water per unit time of a flow that flows or stops according to the opening and closing of the flow valve 207, reports the water volume increased between measurement intervals (increment) to the current water volume storage unit 205. For example, provided that ΔT is the measurement interval, V is the measured water volume, and ΔS is the increment, the increment is computed as ΔS = ΔT • V.

The flow valve 207 is a motorized valve that starts or stops a flow of water, and is controlled by a control signal output from the flow control unit 203. The output unit 208 includes a display, and generates and displays on the display a monitor screen that displays the target water volume being stored in the target water volume storage unit 204 and the current water volume being stored in the current water volume storage unit 205. Also, the output unit 208 includes a speaker that outputs various speech, such as the target water volume and the current water volume.

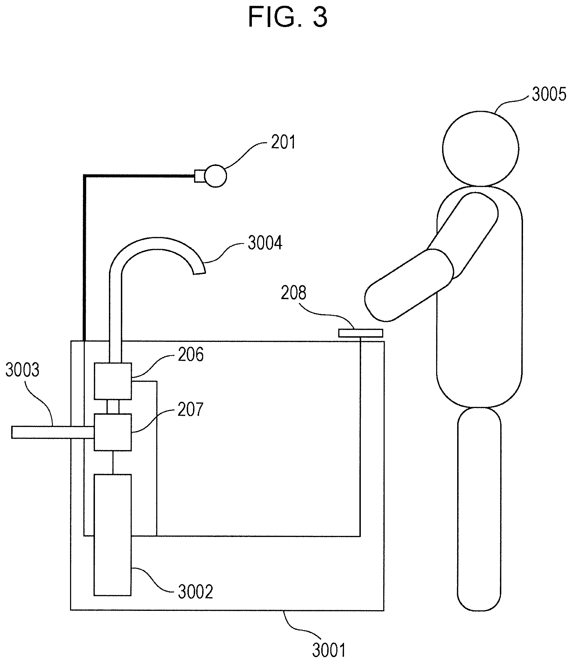

Note that although the communication units 402 and 403 are illustrated as respectively separate blocks in FIG. 2, this is merely one example, and the communication units 402 and 403 may also be realized using a single communication device. Also, in FIG. 2, the speech recognition unit 202, the flow control unit 203, the target water volume storage unit 204, and the current water volume storage unit 205 are described as being provided in the server 220, but the present disclosure is not limited to such a configuration. The speech recognition unit 202, the flow control unit 203, the target water volume storage unit 204, and the current water volume storage unit 205 may also be realized by a home server installed inside a home or specialized equipment installed inside a home (for example, the main unit 3002 illustrated in FIG. 3). In the case of realizing a speech-based flow control system using specialized equipment, the components from the microphone 201 to the output unit 208 may be connected by signal lines, and thus the communication units 401 to 404 for outputting data output from these blocks to the Internet may be omitted.

FIG. 3 is a schematic diagram of a sink 3001 equipped with a speech-based flow control system according to Embodiment 1 of the present disclosure. FIG. 3 illustrates a state in which a speech-based flow control system according to Embodiment 1 is built into a kitchen sink 3001 ordinarily used at home. Note that FIG. 3 illustrates an example of a case in which specialized equipment is equipped with the respective blocks included in the server 220 illustrated in FIG. 2.

The microphone 201, flow measurement unit 206, flow valve 207, and output unit 208 in FIG. 3 correspond to the microphone 201, flow measurement unit 206, flow valve 207, and output unit 208 illustrated in FIG. 2. A main unit 3002 is equipped with the speech recognition unit 202, flow control unit 203, target water volume storage unit 204, and current water volume storage unit 205 of FIG. 2. Note that if a speech-based flow control system is realized using a server 220, the respective blocks included in the server 220 are provided in the server 220 rather than the main unit 3002.

The flow measurement unit 206, flow valve 207, and main unit 3002 are installed inside the sink 3001. A faucet 3004 is attached to the sink 3001 so as to extend upward from the top face of the sink 3001 and curve overhead so that the water outlet faces the top face of the sink 3001. Also, the faucet 3004 communicates with a water pipe 3003. The faucet 3004 causes water supplied from the water pipe 3003 to be flow out into the sink 3001 depending on the opening and closing of the flow valve 207. The water pipe 3003 is connected to waterworks for carrying water supplied from a water purifying facility.

The microphone 201 is attached on the upper side of the sink 3001 so as to be positioned approximately at the height of the mouth of a user 3005 standing in front of the sink 3001, for example. The output unit 208 is disposed on the top face of the sink 3001, at a position within reach of the user 3005. The flow measurement unit 206 is attached at the base of the faucet 3004. The flow valve 207 is attached at the location where the faucet 3004 communicates with the water pipe 3003, for example.

The user 3005 stands in front of the sink 3001, and speaks toward the microphone 201 to input an operation instruction.

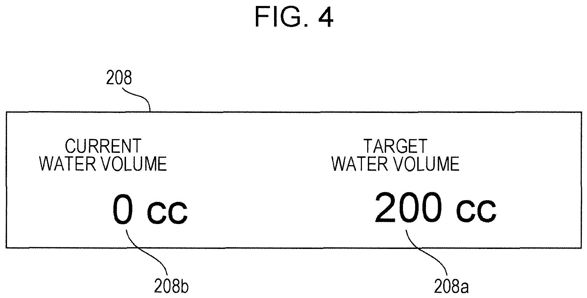

FIG. 4 is a diagram illustrating an example of a monitor screen displayed by the output unit 208. The monitor screen is provided with a display field 208b that displays the current water volume, and a display field 208a that displays the target water volume. In the example of FIG. 4, the current water volume is 0 cc, and thus "0 cc" is displayed in the display field 208b, while the target water volume is 200 cc, and thus "200 cc" is displayed in the display field 208a.

In the example of FIG. 4, the current water volume and the target water volume are displayed as numerical values, but the present disclosure is not limited to such a configuration. For example, a format may be adopted so that an image depicting a container such as a pan, kettle, or pot is displayed, and water levels indicating the current water volume and the target water volume are displayed inside the container illustrated by the image.

Note that the user 3005 is not strictly limited to being positioned in front of the sink 3001, and may also operate the sink 3001 from a distance. In this case, the microphone 201 may be attached to the ceiling of a room or the like in order to pick up an operation instruction given as speech by a user distanced from the sink 3001.

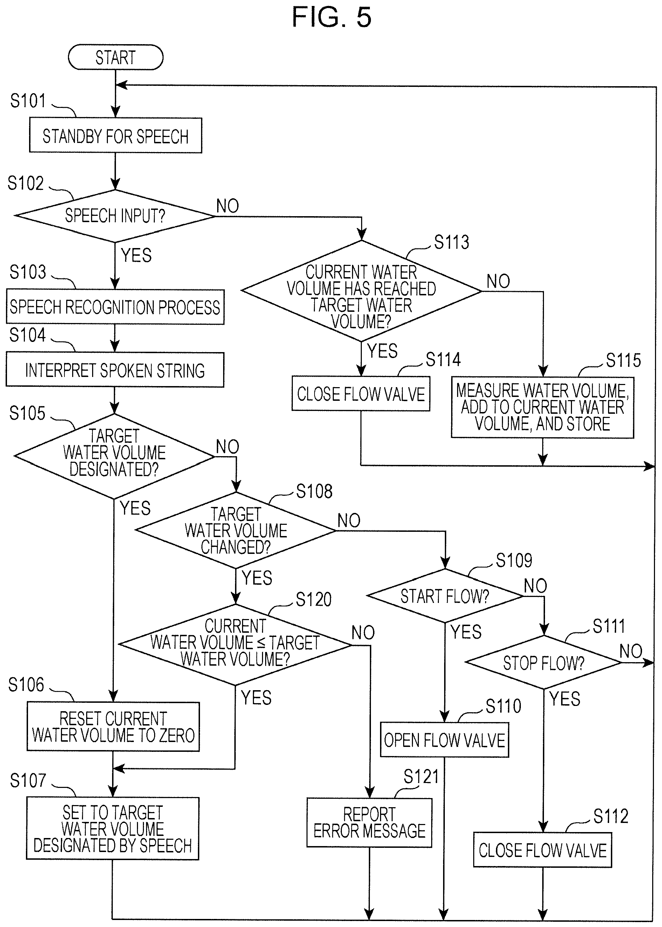

Next, operations of a speech-based flow control system according to Embodiment 1 will be described. FIG. 5 is a flowchart illustrating operations of a speech-based flow control system according to Embodiment 1. First, the microphone 201 stands by for speech spoken by the user 3005 (step S101). Next, the speech recognition unit 202 determines whether or not speech has been input (step S102).

At this point, the speech recognition unit 202 may determine that speech has been input if a speech input signal having an amplitude equal to or greater than a prescribed level is received from the microphone 201. In this case, the speech recognition unit 202 analyzes frequency components of the speech input signal, and if a spectrum of at least a fixed level is distributed over a prescribed frequency band, the speech recognition unit 202 may determine that speech has been input. Alternatively, a switch may be provided on the microphone 201, and if an ON report of this switch is transmitted from the microphone 201, the speech recognition unit 202 may determine that speech has been input if a speech input signal is received after receiving this ON report.

In step S102, in the case of determining that speech has been input (step S102, Yes), the speech recognition unit 202 conducts a speech recognition process on the received speech input signal, and converts the speech input signal into a spoken string indicating the speech that was spoken by the user 3005 (step S103).

At this point, the speech recognition unit 202 may convert the speech input signal into a spoken string by using general speech recognition technology. For example, the speech recognition unit 202 may use an acoustic database storing multiple acoustic models, which are respective features of multiple phonemes, to detect phoneme arrangements in the input speech input signal. Next, the speech recognition unit 202 references a word database, in which multiple words to be recognized are registered, and an order database against the detected order of phonemes, and assigns a word to one or more phonemes. In the order database, probabilities are defined for candidates of each word, and the speech recognition unit 202 decides words in accordance with these probabilities. By using such a process, the speech recognition unit 202 converts the speech input signal into a spoken string.

In step S102, in the case of determining that speech has not been input (step S102, No), the process proceeds to step S113. Next, the flow control unit 203 interprets the spoken string obtained by the processing in step S103 (step S014), and identifies an operation instruction indicated by the speech input signal.

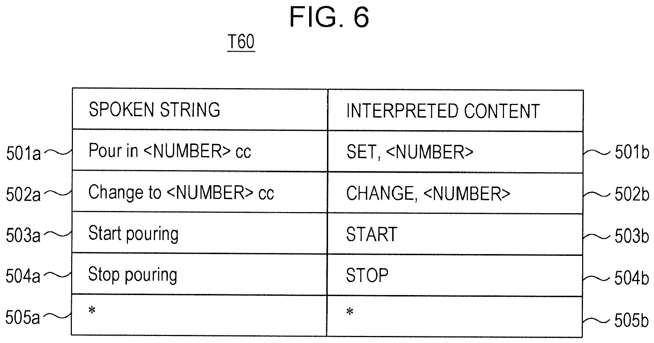

FIG. 6 is a diagram illustrating a data structure of a correspondence table T60 associating spoken strings and interpreted content used in the interpretation of a spoken string in step S104. The flow control unit 203 respectively cross-references the spoken string obtained from the speech recognition unit 202 against the spoken strings 501a, 502a, 503a, and 504a registered in the correspondence table T60 of FIG. 6, and outputs interpreted content corresponding to a spoken string judged to be applicable. The text "<NUMBER>" in the spoken strings 501a and 502a means that an arbitrary number string is cross-referenced.

For example, the spoken string "Pour in 200 cc" includes the string "Pour in" followed by a number string, and thus is judged to be applicable to the spoken string 501a, and is judged to correspond to the interpreted content 501b. As another example, the spoken string "Change to 400 cc" includes the string "Change to" followed by a number string, and thus is judged to be applicable to the spoken string 502a, and is judged to correspond to the interpreted content 502b.

The text "<NUMBER>" in the interpreted content 501b and 502b is substituted with the number portion in the spoken strings 501a and 502a. In the case of a spoken string such as "Pour in 200 cc" or "Change to 400 cc" as above, the text "<NUMBER>" in the interpreted content 501b and 502b is substituted with "200" and "400". Consequently, the interpreted content 501b corresponding to "Pour in 200 cc" becomes "SET, 200", while the interpreted content 502b corresponding to "Change to 400 cc" becomes "CHANGE, 400".

Also, the spoken string "Start pouring" applies to the spoken string 503a, and thus is judged to correspond to the interpreted content 503b, "START". Also, the spoken string "Stop pouring" applies to the spoken string 504a, and thus is judged to correspond to the interpreted content 504b, "STOP". If a spoken string obtained from the speech recognition unit 202 does not apply to any of the spoken strings 501a to 504a, the spoken string is treated as being cross-referenced with 505a "*" and the interpreted content corresponding to this spoken string becomes the "*" indicated by the interpreted content 505b.

Note that the items in the correspondence table T60 are not limited to the above. For example, a correspondence table T60 may be created so as to enable the output of hot water at a designated temperature. Also, spoken strings such as "Make that ... cc" or "Oops, I mean ... cc" may also be registered in the correspondence table T60 as spoken strings for changing an originally designated target water volume. In this case, the spoken strings "Make that ... cc" and "Oops, I mean ... cc" may be registered in the correspondence table T60 in association with the interpreted content 502b. Note that the speech information indicated by the spoken string 501a is an example of first speech information, while the speech information indicated by the spoken string 502a is an example of second speech information. Also, the value of <NUMBER> in the spoken string 501a is an example of a first specific quantity, while the value of <NUMBER> in the spoken string 502a is an example of a second specific quantity.

Step S105, step S108, step S109, and step S111 are steps that judge which interpreted content is output in step S104. If the interpreted content in step S102 is "SET, <NUMBER>" designating a target water volume (step S105, Yes), the flow control unit 203 proceeds to step S106, whereas if the interpreted content is "CHANGE, <NUMBER>" indicating a change of the target water volume (step S105, No and step S108, Yes), the flow control unit 203 proceeds to step S120. Also, if the interpreted content is "START" indicating the starting of water flow (step S108, No and step S109, Yes), the flow control unit 203 proceeds to step S110, whereas if the interpreted content is "STOP" indicating the stopping of water flow (step S109, No and step S111, Yes), the flow control unit 203 proceeds to step S112. If the interpreted content is "*" (step S111, No), the flow control unit 203 proceeds to step S101.

In step S105, if the interpreted content is "SET, <NUMBER>" indicating a designation of a target water volume (step S105, Yes), the flow control unit 203 resets to 0 the current water volume being stored in the current water volume storage unit 205 (step S106). Next, the flow control unit 203 sets the value of the "<NUMBER>" part of the interpreted content "SET, <NUMBER>" as the target water volume in the target water volume storage unit 204 (step S107), and proceeds to step S101. Consequently, a target water volume that the user designated using speech is set.

In step S108, if the interpreted content is "CHANGE, <NUMBER>" indicating a change of the target water volume (step S108, Yes), the flow control unit 203 proceeds to step S107 if the current water volume being stored in the current water volume storage unit 205 is less than or equal to the target water volume (step S120, Yes). On the other hand, the flow control unit 203 proceeds to step S121 if the current water volume is greater than the target water volume (step S120, No).

In step S107, the value of the "<NUMBER>" part of the interpreted content "CHANGE, <NUMBER>" is set as the target water volume in the target water volume storage unit 204. Consequently, the currently set target water volume is changed to the target water volume whose change was designated by the user using speech.

The already-supplied water volume has an irreversible property, meaning that the poured water cannot be taken back. For this reason, when the target water volume is changed by the user, if the already-supplied water volume is greater than the changed target water volume, the speech-based flow control system is unable to make the current water volume reach the target water volume. Accordingly, in the present disclosure, when the target water volume is changed by the user, the target water volume is made to change only if the condition in step S120 stipulating that the changed target water volume is equal to or greater than the current water volume is satisfied.

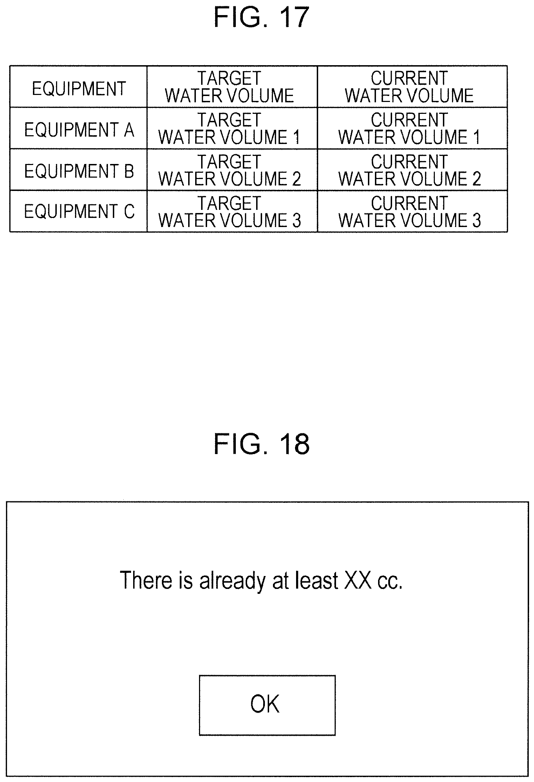

In step S121, the flow control unit 203 outputs an error message reporting instruction to the output unit 208, causing the output unit 208 to report an error message. FIG. 18 is a diagram illustrating an example of an error scan for reporting an error message. On the error screen as illustrated in FIG. 18, "There is already at least XX cc." is displayed. Herein, "XX cc" represents a numerical value indicating the target water volume whose change was designated by the user. Consequently, the user is able to recognize that the change in the target water volume was not allowed. In this case, the user may, for example, discard the already-supplied water from a bucket, place the bucket in the sink 3001, and say "Pour in XX cc" to input an operation instruction causing the target water volume to be supplied.

In step S109, if the interpreted content is "START" indicating the starting of water flow (step S109, Yes), the flow control unit 203 outputs an OPEN control signal to open the flow valve 207 (step S110), and proceeds to step S101. Consequently, water begins to pour. The control signal transmitted in this case corresponds to an example of a first control command.

In step S111, if the interpreted content is "STOP" indicating the stopping of water flow (step S111, Yes), the flow control unit 203 closes the flow valve 207 (step S112), and proceeds to step S101. Consequently, water stops pouring.

On the other hand, in step S111, if the interpreted content is "*" (step S111, No), the process proceeds to step S101.

In step S102, in the case of determining that speech has not been input (step S102, No), the flow control unit 203 determines whether or not the current water volume being stored in the current water volume storage unit 205 has reached the target water volume being stored in the target water volume storage unit 204 (step S113).

If the current water volume has reached the target water volume (step S113, Yes), the flow control unit 203 outputs a CLOSE control signal to close the flow valve 207 (step S114), and proceeds to step S101. Consequently, the user obtains water at the target volume. The control signal output in this case is an example of a second control command or a third control command.

On the other hand, if the current water volume has not reached the target water volume (step S113, No), the flow control unit 203 adds an increment in water volume obtained from the flow measurement unit 206 to the current water volume being stored in the current water volume storage unit 205 and causes the current water volume storage unit 205 to store the result (step S115), and proceeds to step S101.

According to the above, the user obtains a desired volume of water by speaking. In step S115, the current water volume is stored in the current water volume storage unit 205, and the current water volume stored by the current water volume storage unit 205 is not reset to zero even if speech to change the target water volume is spoken. Subsequently, the pouring of water is stopped when the current water volume reaches the target water volume in step S113. For this reason, in the case in which the user first inputs 400 cc as the target water volume, and then changes the target water volume to 700 cc, for example, 700 cc of water is obtained, without performing laborious work such as checking the current water volume, calculating the difference between the current water volume and the changed target water volume, and inputting that difference into the speech-based flow control system. For this reason, user operability is improved.

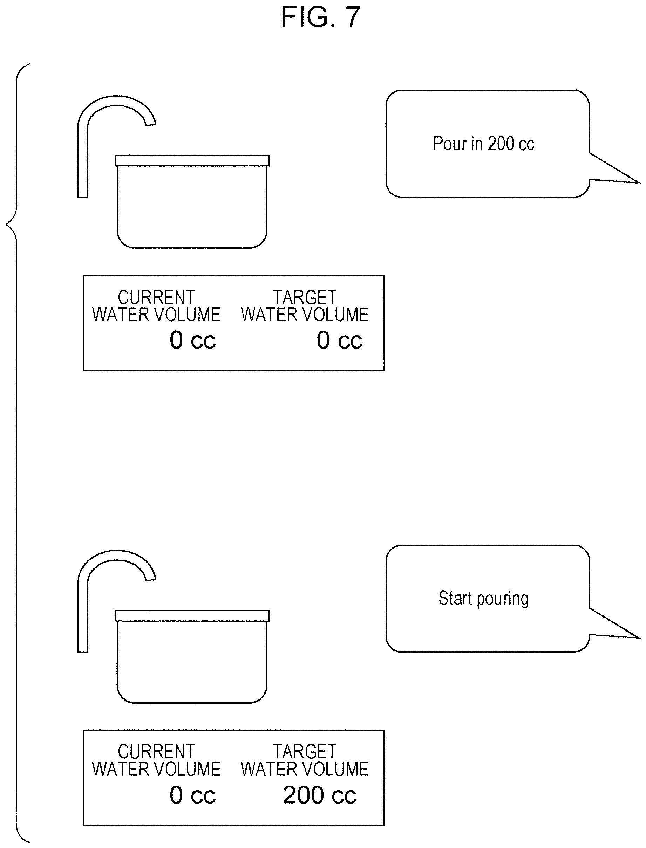

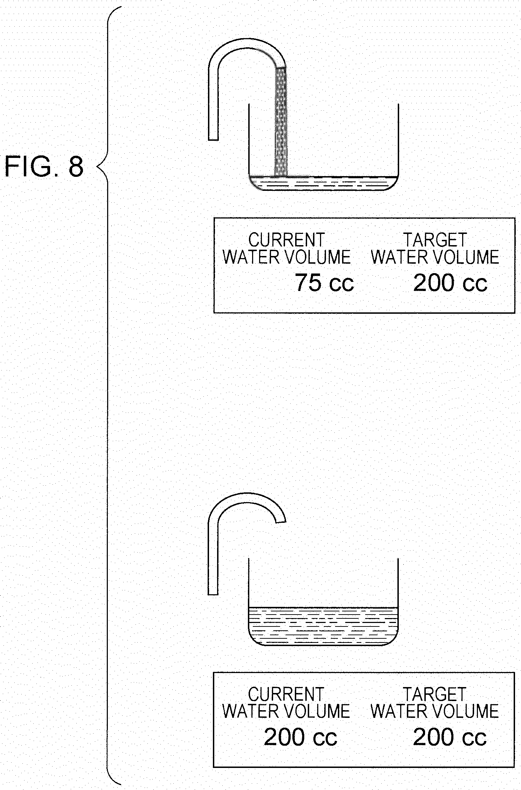

Next, operating examples of a speech-based flow control system according to Embodiment 1 of the present disclosure will be described. FIGS. 7 and 8 are schematic diagrams illustrating a first operating example. The first operating example will be described for the case of supplying 200 cc of water. In the initial state of the speech-based flow control system, the current water volume is "0 cc", and the target water volume is also "0 cc". When the speech-based flow control system is in the state of step S101 and the user 3005 says "Pour in 200 cc" as illustrated in the upper part of FIG. 7, the process proceeds from step S102 to step S105, the current water volume is set to 0 in step S106, and the target water volume is set to "200 cc" in step S107. The lower part of FIG. 7 illustrates a state in which the current water volume is set to "0 cc", and the target water volume is set to "200 cc".

Next, if the user 3005 says "Start pouring" while in this state, the process proceeds from step S101 to No in step S105, No in step S108, Yes in step S109, and in step S110, the flow valve 207 is opened and the discharge of water is started. The flow measurement unit 206 periodically measures the flow volume, and the current water volume is periodically updated and displayed by the output unit 208. The upper part of FIG. 8 illustrates a state in which the discharge of water has started, a short time has elapsed, and the current water volume has become "75 cc". The discharge of water continues, and in the case of judging in step S113 that the current water volume has reached the target water volume (200 cc), the flow valve 207 is closed in step S114. The lower part of FIG. 8 illustrates a state in which the current water volume has reached 200 cc, and the discharge of water has stopped.

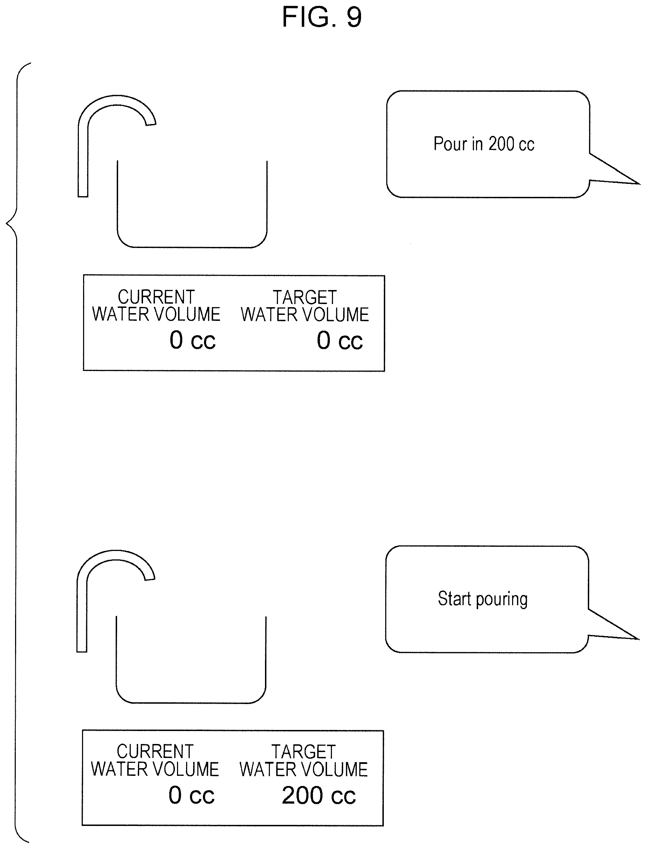

Next, a second operating example will be described. FIGS. 9 to 12 are schematic diagrams illustrating a second operating example. The second operating example will be described for a case in which, for example, the user first initiates the pouring of water with the intent to pour in 200 cc, but changes to 400 cc partway through. Like the first operating example, in the initial state of the speech-based flow control system, the current water volume is "0 cc", and the target water volume is also "0 cc". When the speech-based flow control system is in the state of step S101 and the user 3005 says "Pour in 200 cc" as illustrated in the upper part of FIG. 9, the process proceeds from step S102 to step S105, the current water volume is set to "0 cc" in step S106, and the target water volume is set to "200 cc" in step S107, similarly to the first operating example. The lower part of FIG. 9 illustrates a state in which the current water volume is set to "0 cc", and the target water volume is set to "200 cc".

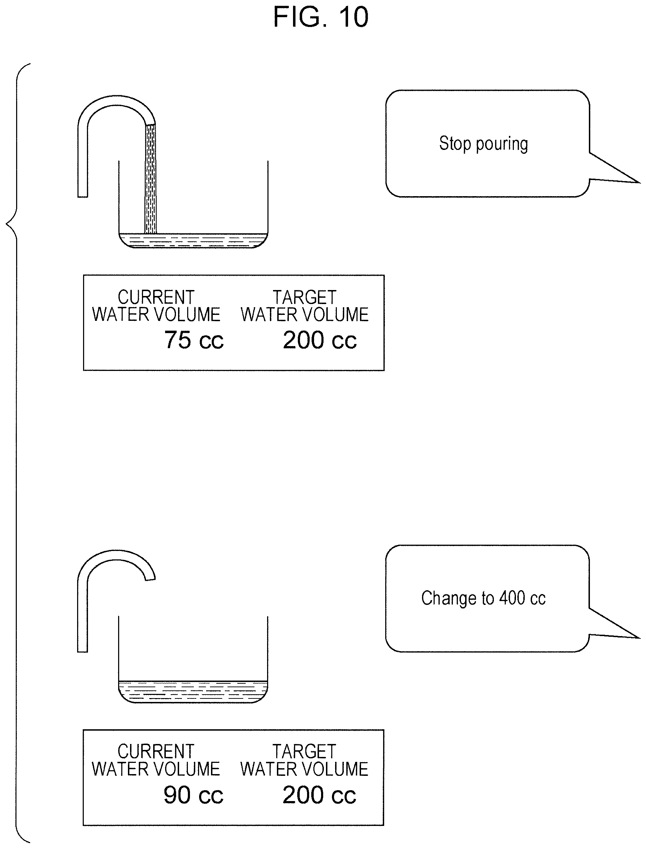

Next, if the user 3005 says "Start pouring" while in this state, the process proceeds from step S101 to step S105, No in step S108, Yes in step S109, and in step S110, the flow valve 207 is opened and the discharge of water is started, similarly to the first operating example. The flow measurement unit 206 periodically measures the flow volume, and the current water volume is periodically updated and displayed by the output unit 208, similarly to the first operating example. The upper part of FIG. 10 illustrates a state in which the current water volume has become "75 cc". Next, if the user 3005 says "Stop pouring" while in this state, the process proceeds from step S101 to step S105, No in step S108, No in step S109, Yes in step S111, and in step S112, the flow valve 207 is closed and the discharge of water is stopped.

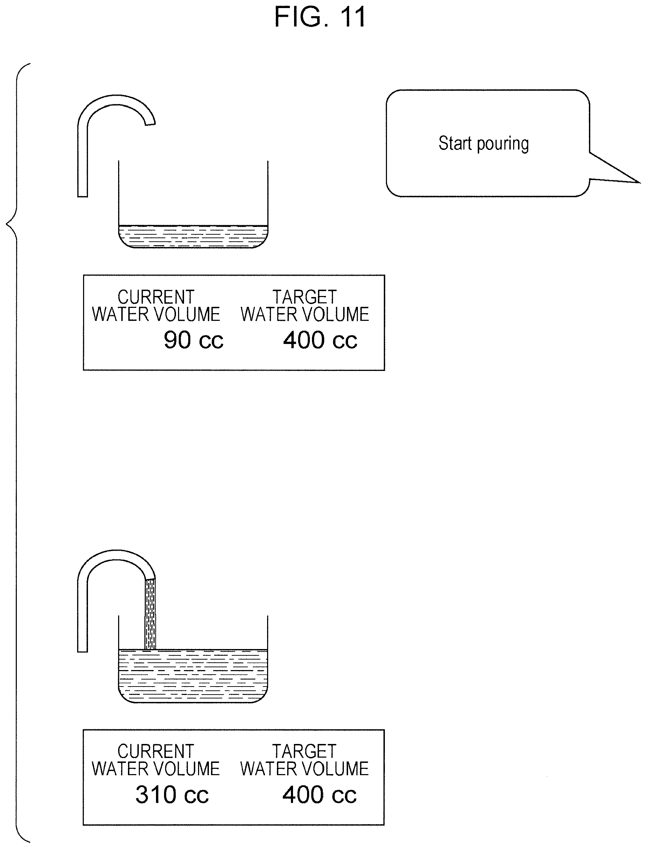

The lower part of FIG. 10 illustrates a state in which the discharge of water has stopped and the current water volume has become "90 cc". At this point, if the user 3005 says "Change to 400 cc", the process proceeds from step S101 to No in step S105, Yes in step S108, Yes in step S120, and in step S107, the target water volume is set to "400 cc". The upper part of FIG. 11 illustrates a state in which the target water volume has changed from 200 cc to 400 cc.

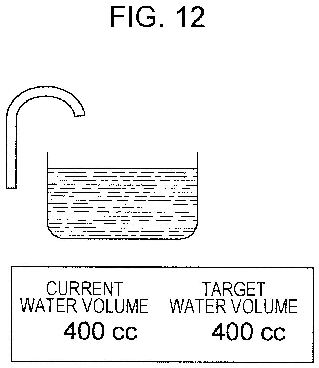

Next, if the user 3005 says "Start pouring", the process proceeds from step S101 to No in step S105, No in step S108, Yes in step S109, and in step S110, the flow valve 207 is opened and the discharge of water is resumed. The lower part of FIG. 11 illustrates a state in which the discharge of water has resumed, a short time has elapsed, and the current water volume has become "310 cc". Subsequently, the discharge of water continues, and in the case of judging in step S113 that the current water volume has reached the changed target water volume "400 cc", the flow valve 207 is closed in step S114. FIG. 12 illustrates a state in which the current water volume has reached "400 cc", and the discharge of water has stopped.

According to such a configuration, by storing the water volume discharged from the faucet 3004 in the current water volume storage unit 205, if the desired target water volume is changed partway through pouring, the additional volume of water to pour is appropriately handled by the speech-based flow control system as the difference between the changed target water volume and the current water volume. For this reason, the user 3005 is able to easily change the volume of water to be poured, without calculating the additional volume of water to pour.

Note that in the second example above, the target water volume is changed due to the user saying "Stop pouring", and then saying "Change to 400 cc", as illustrated in FIG. 10. However, this is merely one example, and the target water volume may be changed to "400 cc" as a result of the user saying "Change to 400 cc", without saying "Stop pouring" while pouring is in progress.

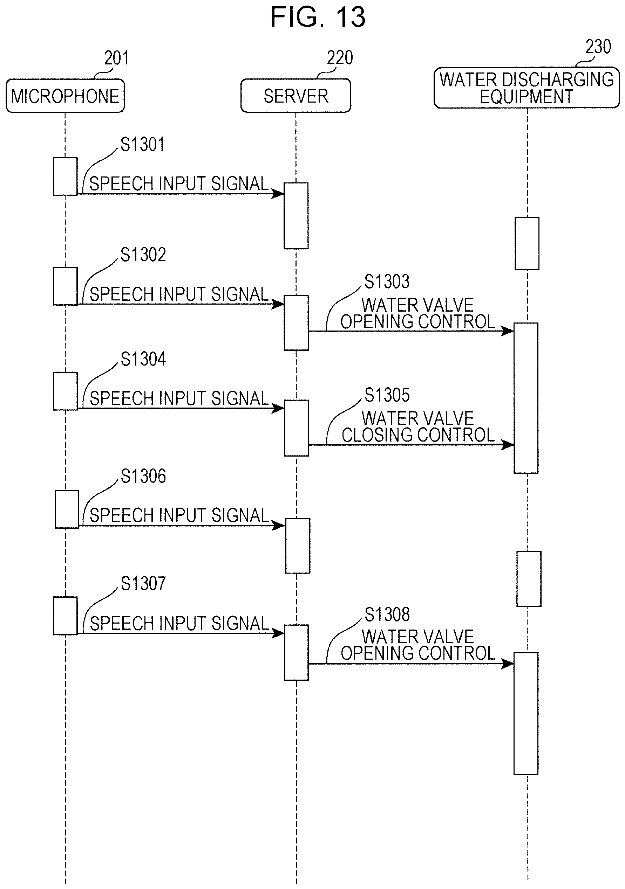

FIG. 13 is a sequence diagram for the speech-based flow control system illustrated in FIG. 2. First, if the microphone 201 picks up the speech "Pour in XX cc" spoken by the user in order to set the target water volume, for example, the microphone 201 transmits a speech input signal indicating that speech to the server 220 (step S1301). The server 220 analyzes the speech input signal, and extracts and stores the target water volume in the target water volume storage unit 204. Also, at this point, the server 220 resets the current water volume storage unit 205 to 0.

If the microphone 201 picks up the speech "Start pouring" spoken by the user in order to start the pouring of water, for example, the microphone 201 transmits a speech input signal indicating that speech to the server 220 (step S1302). The server 220 interprets the speech input signal, and transmits to the water discharging equipment 230 an OPEN control signal for controlling the opening of the flow valve 207 (step S1303). As a result, the water discharging equipment 230 opens the flow valve 207, and starts the pouring of water.

If the microphone 201 picks up the speech "Stop pouring" spoken by the user in order to end the pouring of water, for example, the microphone 201 transmits a speech input signal indicating that speech to the server 220 (step S1304). The server 220 interprets the speech input signal, and transmits to the water discharging equipment 230 a CLOSE control signal for controlling the closing of the flow valve 207 (step S1305). As a result, the water discharging equipment 230 closes the flow valve 207, and ends the pouring or water.

If the microphone 201 picks up the speech "Change to XX cc" spoken by the user in order to change the target water volume, for example, the microphone 201 transmits a speech input signal indicating that speech to the server 220 (step S1306). The server 220 analyzes the speech input signal, and extracts and stores the changed target water volume in the target water volume storage unit 204. In this case, the previously stored target water volume is deleted from the target water volume storage unit 204. Consequently, a new target water volume is set.

In step S1307 and step S1308, the flow valve 207 is opened and the pouring of water is started, similarly to step S1302 and step S1303.

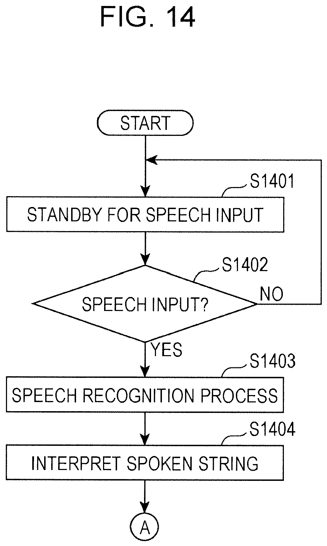

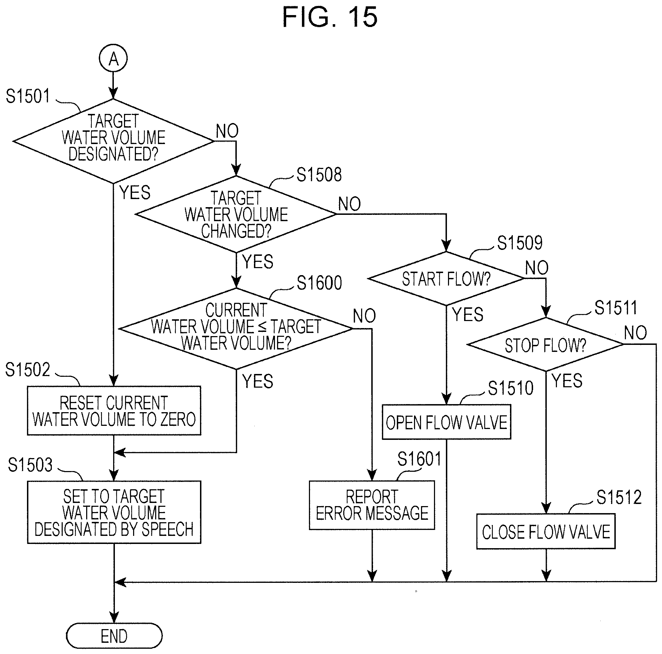

FIGS. 14 and 15 are flowcharts illustrating processing by a server 220 that has received a speech input signal in step S1301, step S1302, step S1304, step S1306, and step S1307 of FIG. 13. The flowcharts in FIGS. 14 and 15 are an exemplary modification of the flowchart illustrated in FIG. 5.

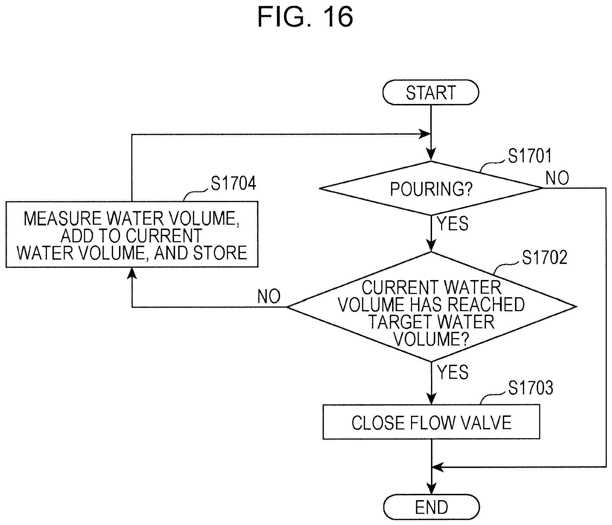

The process from step S1401 to step S1404 is the same as step S101 to step S104 of FIG. 5, except that the process returns to step S1401 in the case of No in step S1402. Herein, the process returns to step S1401 in the case of No in step S1402 because the processing in step S113, step S114, and step S115 of FIG. 5 is executed in the flowchart of FIG. 16 discussed later.

The processing from step S1501 to step S1512, step S1600, and step S1601 is the same as step S105 to step S112, step S120, and step S121 of FIG. 2, except that the process ends after step S1503, step S1601, step S1510, and step S1512. Herein, the process ends after step S1503, step S1601, step S1510, and step S1512 because the flowcharts in FIGS. 14 and 15 are executed every time a speech input signal is received.

FIG. 16 is a flowchart executed in the case of adopting the flowcharts in FIGS. 14 and 15, and is a flowchart illustrating a determination process by the server 220 for determining whether or not the current water volume has reached the target water volume. First, the server 220 determines whether or not the flow valve 207 is currently open and pouring is in progress (step S1701). If pouring is in progress (step S1701, Yes), the process proceeds to step S1702, whereas if pouring is not in progress (step S1701, No), the process ends.

The processing in step S1702, step S1703, and step S1704 is the same as step S113, step S114, and step S115 of FIG. 2, except that the process ends after step S1703 and the process returns to step S1701 in step S1704. In other words, if pouring is in progress, the current water volume stored in the current water volume storage unit 205 is periodically updated until the current water volume reaches the target water volume, and when the current water volume reaches the target water volume, the flow valve is closed and pouring ends.

FIG. 17 is a diagram illustrating an example of a management table indicating relationships between a target water volume and a current water volume stored by the target water volume storage unit 204 and the current water volume storage unit 205 in the case of adopting the speech-based flow control system illustrated in FIG. 2. Since the server 220 centrally manages plural water discharging equipment 230, the target water volume and the current water volume of each water discharging equipment 230 are managed individually. Accordingly, in the case of adopting a speech-based flow control system using the server 220, the target water volume stored in the target water volume storage unit 204 and the current water volume stored in the current water volume storage unit 205 are managed by being stored in a management table as illustrated in FIG. 17.

The management table includes Equipment, Target Water Volume, and Current Water Volume fields. The Equipment field stores an identifier of water discharging equipment 230 to be controlled. Note that the equipment managed by the management table may be equipment other than the water discharging equipment 230.

The Target Water Volume field indicates a target water volume set for each water discharging equipment 230, while the Current Water Volume field indicates a current water volume for each water discharging equipment 230. Herein, equipment A to C is registered as water discharging equipment 230. The equipment A to C may be equipment inside the same home, or equipment inside different homes. Target water volumes "1", "2", and "3" are respectively registered as the target water volumes of the equipment A to C, and current water volumes "1", "2", and "3" are respectively registered as the current water volumes of the equipment A to C.

In this way, since the target water volume and the current water volume of each water discharging equipment 230 is registered in association with an identifier for each water discharging equipment 230 in the management table, the server 220 is able to centrally manage the status of each water discharging equipment 230. Note that although FIG. 17 illustrates an example in which there are three pieces of water discharging equipment 230, this is merely one example, and one or more pieces of water discharging equipment 230 may be registered in the management table. In other words, the management table is provided with a record for registering a target water volume and a current water volume for all pieces of water discharging equipment 230 to which the service is applied.

In Embodiment 1, a speech-based flow control system recognizes speech designating a volume of water, such as "Pour in XX cc", and decides the water volume to supply, for example. However, the present disclosure is not limited to such a configuration, and a speech-based flow control system may also recognize speech designating a weight of water, such as "Pour in XX grams of water", and decide the quantity of water to supply. At this point, if the flow measurement unit 206 in the speech-based flow control system is configured to measure the volume of supplied water, for example, the property of water having a specific weight of approximately 1 may be utilized, and after the flow control unit 203 conducts a conversion process that converts the designated weight of water, the water discharging equipment 230 may supply the quantity of water converted to volume. Consequently, even if the flow measurement unit 206 measures the volume of water, the flow control unit 203 is able to judge whether or not the supplied quantity of water has reached a designated weight.

In addition, the flow measurement unit 206 may also be configured to be able to directly measure the weight of water. In this case, if the speech-based flow control system recognizes speech designating a weight of water, the speech-based flow control system may directly judge whether or not the measured weight of water has reached the designated weight. On the other hand, if the speech-based flow control system recognizes speech designating a volume of water, the speech-based flow control system may first conduct a conversion process that converts the designated volume of water to a weight, and then supply the quantity of water converted to weight. Consequently, even if the flow measurement unit 206 measures the weight of water, the flow control unit 203 is able to judge whether or not the supplied quantity of water has reached a designated volume.

### (Embodiment 2)

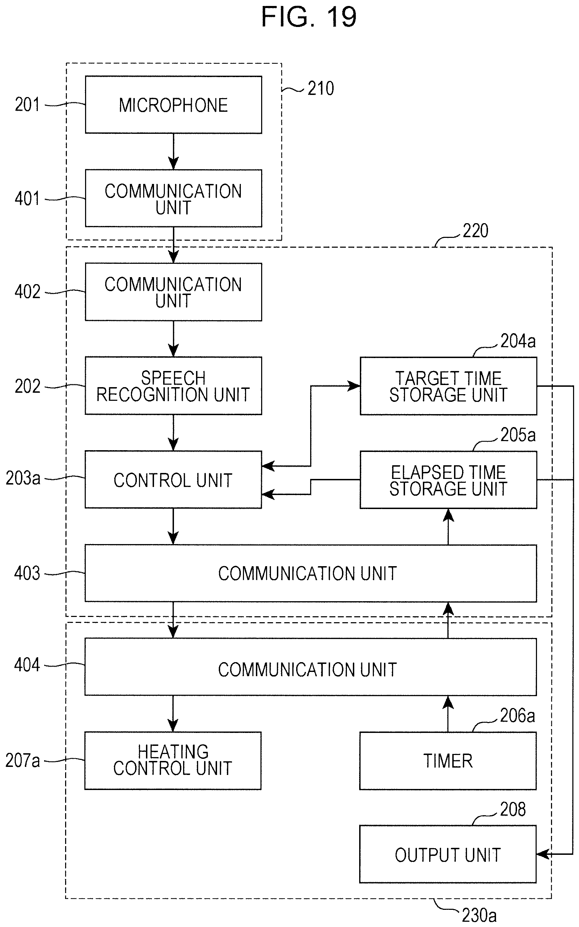

FIG. 19 is a block diagram illustrating a configuration in the case of applying a speech-based equipment control system according to Embodiment 2 to a speech-based heating control system. Note that in the present embodiment, structural elements that are the same as Embodiment 1 are denoted with the same signs, and description may be reduced or omitted.

Embodiment 1 was described by taking as an example the case of applying a speech-based equipment control system to a flow control system. The speech-based equipment control system according to Embodiment 2 will be described by taking as an example the case of applying a heating kitchen appliance 230a to a speech-based heating control system. In other words, a speech-based equipment control system according to an embodiment of the present disclosure is applicable to the control of any equipment, insofar as a user designates an irreversible physical quantity with respect to that equipment. Accordingly, in Embodiment 2, a speech-based equipment control system is applied to a speech-based heating control system that controls a heating time with respect to a heating kitchen appliance, such as a microwave oven, an oven, a steam cooker, or an induction heating stove.

Embodiment 2 operates similarly to Embodiment 1, even in a case in which an original heating time of "30 minutes" is designated, for example, but the user inputs using speech an instruction that changes the heating time to "45 minutes" partway through, for example.

In Embodiment 2, the server 220 is provided with a control unit 203a, a target time storage unit 204a, and an elapsed time storage unit 205a instead of the flow control unit 203, the target water volume storage unit 204, and the current water volume storage unit 205.

The control unit 203a judges which operation instruction from among prescribed heating control operation instructions is indicated by the user's spoken string converted by the speech recognition unit 202. In addition, the control unit 203a controls a heating control unit 207a in accordance with the judged operation instruction, and thereby executes control such as starting the heating of food, or stopping the heating of food. Specifically, in the case of judging that the user has input by speech an operation instruction for setting a desired heating time (a target heating time), for example, the control unit 203a stores that target heating time in the target time storage unit 204a.

Furthermore, in the case of judging that the user has input by speech an operation instruction for starting the heating, the control unit 203a outputs to the heating control unit 207a a START control signal for causing the heating control unit 207a to start heating, and causes the heating control unit 207a to start heating food. Furthermore, in the case of judging that the user has input by speech an operation instruction for stopping the heating of food, the control unit 203a outputs to the heating control unit 207a a STOP control signal for causing the heating control unit 207a to stop heating, and causes the heating control unit 207a to stop heating food. In addition, the control unit 203a also periodically judges, for example, whether or not the elapsed time of heating at a given point in time stored in the elapsed time storage unit 205a has reached the target heating time being stored in the target time storage unit 204a. Subsequently, in the case of judging that the elapsed time has not reached the target heating time, the control unit 203a does not output an END control signal to the heating control unit 207a, and continues the heating of food. On the other hand, in the case of judging that the elapsed time has reached the target heating time, the control unit 203a outputs an END control signal to the heating control unit 207a, and stops the heating of food. At this point, the timing at which a timer 206a reports an increment that is reported at a prescribed reporting interval may be adopted as the timing at which the control unit 203a periodically determines whether or not the target heating time has been reached, for example. In other words, the control unit 203a may judge whether or not the target heating time has been reached in synchronization with a reporting interval of the timer 206a. However, this is merely one example, and the control unit 203a may also judge whether or not the target heating time has been reached on a shorter time interval or a longer time interval than the reporting interval.

The target time storage unit 204a stores a target heating time designated by a user as discussed earlier. The elapsed time storage unit 205a stores a cumulative value of increments reported every reporting interval by the timer 206a as an elapsed time. Herein, if the timer 206a reports an increment that is reported every reporting interval, for example, the elapsed time storage unit 205a causes the control unit 203a to add the reported increment to the elapsed time that is currently being stored, and updates the elapsed time with the resulting value. For example, provided that S is the elapsed time that is currently being stored, ΔS is the reported increment, and S' is the elapsed time after being updated, the elapsed time after being updated is computed as S' = S + ΔS.

The heating kitchen appliance 230a is equipped with a communication unit 404, a timer 206a, a heating control unit 207a, and an output unit 208. If heating is started by the heating control unit 207a, the timer 206a starts a count of the elapsed time of heating, and reports an increment of the elapsed time to the elapsed time storage unit 205a at a prescribed reporting interval. For example, provided that ΔT is the reporting interval, the increment is expressed as ΔT.

The heating control unit 207a is made up of a magnetron, induction heater, or steam heater, and heats food targeted for heating.

Note that in Embodiment 2, the communication unit 403 transmits a control signal output from the control unit 203a to the heating control unit 207a via a network, and in addition, receives an increment output from the timer 206a via the network, and outputs the received increment to the elapsed time storage unit 205a. Furthermore, the communication unit 403 transmits the target heating time being stored in the target time storage unit 204a and the elapsed time being stored in the elapsed time storage unit 205a to the output unit 208. Herein, the communication unit 403 may transmit the target heating time and the elapsed time to the output unit 208 if the target heating time and the elapsed time are updated in the target time storage unit 204a and the elapsed time storage unit 205a. In addition, the communication unit 404 receives a control signal transmitted from the communication unit 403, and in addition, transmits an increment output from the timer 206a to the elapsed time storage unit 205a via the network. Additionally, the communication unit 404 receives and outputs the target heating time and the elapsed time to the output unit 208.

In Embodiment 2, the output unit 208 generates and displays on a display a monitor screen that displays the target heating time being stored in the target time storage unit 204a and the elapsed time being stored in the elapsed time storage unit 205a. Also, the output unit 208 includes a speaker that outputs various speech, such as the target heating time and the elapsed time.

In Embodiment 2, the monitor screen displayed by the output unit 208 adopts a monitor screen as illustrated in FIG. 4, but with the current water volume replaced by the elapsed time, and the target water volume replaced by the target heating time.

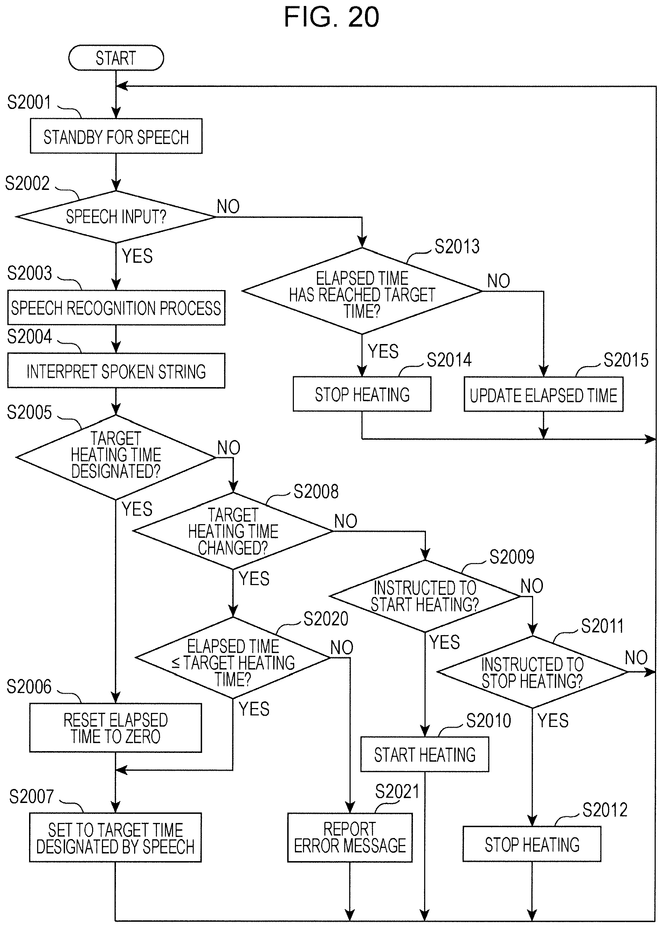

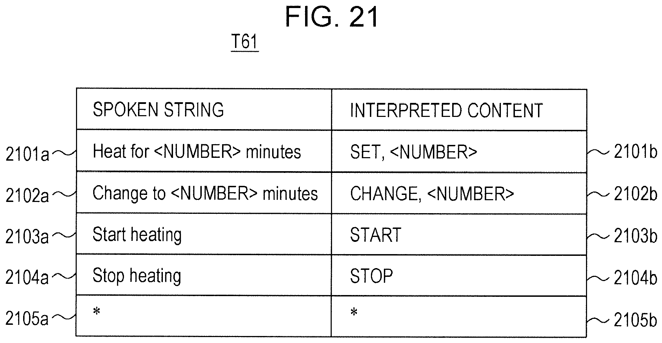

FIG. 20 is a flowchart illustrating operations of a speech-based heating control system according to Embodiment 2. Step S2001 to step S2005 are the same as step S101 to step S105 of FIG. 5. Note that in step S2004, a spoken string is interpreted using the correspondence table T61 illustrated in FIG. 21.

FIG. 21 is a diagram illustrating a data structure of a correspondence table T61 associating spoken strings and interpreted content used in the interpretation of a spoken string in step S2004.

Since the correspondence table T61 is a table used for heating control, the spoken strings 2101a to 2104a differ from the spoken strings 501a to 504a of the correspondence table T60. The interpreted content 2101b to 2105b is the same as the interpreted content 501b to 505b of the correspondence table T60.

For example, the spoken string "Heat for 30 minutes" includes the string "Heat for" followed by a number string, and thus is judged to be applicable to the spoken string 2101a, and is judged to correspond to the interpreted content 2101b. As another example, the spoken string "Change to 45 minutes" includes the string "Change to" followed by a number string, and thus is judged to be applicable to the spoken string 2102a, and is judged to correspond to the interpreted content 2102b.

Also, the spoken string "Start heating" includes "Start", and thus is judged to be applicable to the spoken string 2103a, and is judged to correspond to the interpreted content 2103b, "START". Also, the spoken string "Stop heating" includes "Stop", and thus is judged to be applicable to the spoken string 2104a, and is judged to correspond to the interpreted content 2104b, "STOP".

In step S2005, if the interpreted content is "SET, <NUMBER>" indicating a designation of a target heating time (step S2005, Yes), the control unit 203a resets to 0 the elapsed time being stored in the elapsed time storage unit 205a (step S2006). Next, the control unit 203a sets the value of the "<NUMBER>" part of the interpreted content "SET, <NUMBER>" as the target heating time in the target time storage unit 204a (step S2007), and proceeds to step S2001.

In step S2008, if the interpreted content is "CHANGE, <NUMBER>" indicating a change of the target heating time (step S2008, Yes), the control unit 203a proceeds to step S2007 if the elapsed time being stored in the elapsed time storage unit 205a is less than or equal to the target heating time (step S2020, Yes). On the other hand, the control unit 203a proceeds to step S2021 if the elapsed time is greater than the target heating time (step S2020, No).

In step S2007, the value of the "<NUMBER>" part of the interpreted content "CHANGE, <NUMBER>" is set as the target heating time in the target time storage unit 204a. Consequently, the currently set target heating time is changed to the target heating time whose change was designated by the user using speech.

The elapsed time has an irreversible property, meaning that the time cannot be taken back. For this reason, when the target heating time is changed by the user, if the elapsed time is greater than the changed target heating time, the speech-based heating control system is unable to make the elapsed time reach the target heating time. Accordingly, in the present disclosure, when the target heating time is changed by the user, the target heating time is made to change only if the condition in step S2020 stipulating that the changed target heating time is equal to or greater than the elapsed time is satisfied.

In step S2021, the control unit 203s outputs an error message reporting instruction to the output unit 208, causing the output unit 208 to report an error message. In Embodiment 2, an error message displaying "XX minutes have already elapsed.", for example, is adopted instead of the error message displaying "There is already at least XX cc." in FIG. 18.

In step S2009, if the interpreted content is "START" indicating the starting of heating (step S2009, Yes), the control unit 203a causes the heating control unit 207a to start heating (step S2010), and proceeds to step S2001. Consequently, the heating of food is started.

In step S2011, if the interpreted content is "STOP" indicating the stopping of heating (step S2011, Yes), the control unit 203a causes the heating control unit 207a to stop heating (step S2012), and proceeds to step S2001. Consequently, the heating of food is stopped.

On the other hand, in step S2011, if the interpreted content is "*" (step S2011, No), the process proceeds to step S2001.

In step S2002, in the case of determining that speech has not been input (step S2002, No), the control unit 203a determines whether or not the elapsed time being stored in the elapsed time storage unit 205a has reached the target heating time being stored in the target time storage unit 204a (step S2013).

When the elapsed time reaches the target heating time (step S2013, Yes), the control unit 203a causes the heating control unit 207a to stop heating (step S2014), and proceeds to step S2001. Consequently, the user obtains food cooked for the target heating time.

On the other hand, if the elapsed time has not reached the target heating time (step S2013, No), the control unit 203s adds a time increment obtained from the timer 206a to the elapsed time being stored in the elapsed time storage unit 205a and causes the elapsed time storage unit 205a to store the result (step S2015), and proceeds to step S2001.

In this way, in Embodiment 2, in the case in which the user first inputs 30 minutes as the target heating time, and then changes the target heating time to 45 minutes, for example, the target heating time may be changed to 45 minutes without performing laborious work such as checking the elapsed time, calculating the difference between the elapsed time and the changed target heating time, and inputting that difference into the speech-based heating control system. For this reason, user operability is improved.

### (Other)

(1) Although Embodiment 1 illustrates an example of flow control and Embodiment 2 illustrates an example of heating control, the present disclosure is also applicable to blinds and shutters. For example, when a user gives an instruction to raise or lower a window blind, suppose that "30 cm" is first designated as the raising or lowering amount. The present disclosure is applicable in the case in which the user changes the raising amount or lowering amount to "45 cm" partway through the raising or lowering.
(2) The present disclosure is applicable to not only the case in which a changed target quantity is greater or larger compared to a target quantity included in an initial instruction, but is also applicable to the reverse case. Specifically, in the case in which a changed target quantity is less than or smaller compared to an initial target quantity, the present disclosure is applicable if the current quantity at the time of receiving the change instruction is less than or smaller than the changed target quantity.
(3) Although Embodiment 1 cites water as an example of the prescribed material, the present disclosure is not limited thereto, and a liquid other than water, a powdered or granular material, or a material in a paste-like form may also be adopted. For a liquid other than water, liquid cooking ingredients such soy sauce, vinegar, sauce, and alcohol may be adopted, for example. A fuel such as gasoline may also be adopted as a liquid other than water. Also, for a powdered or granular material, ingredients such as sugar, salt, flour, and starch may be adopted, for example. Also, for a material in a paste-like form, ingredients such as miso, butter, and mustard may be adopted, for example.
(4) In Embodiment 2, the flowchart illustrated in FIG. 20 is adopted, but the flowcharts illustrated in FIGS. 14 to 16 may also be adopted. In this case, in FIGS. 14 to 16, it is sufficient to substitute target water volume with target heating time, current water volume with elapsed time, and the pouring of water with heating.
(5) In Embodiments 1 and 2, an error message is reported to the user via the error screen illustrated in FIG. 18, but the present disclosure is not limited thereto, and an error message may also be reported to the user by using speech. In this case, it is sufficient to output via the speaker speech saying "There is already at least XX cc." in Embodiment 1, and "XX minutes have already elapsed." in Embodiment 2.
(6) In Embodiment 1, the instruction designating the target water volume and the instruction to start pouring are separated. However, if a target water volume is designated, the pouring of water may be started without waiting for an instruction to start pouring. In this case, in the flowchart in FIG. 5, a step that outputs a control signal causing the water discharging equipment 230 to start pouring water as a first control command may be provided after step S107.
(7) In Embodiment 2, the instruction designating the target heating time and the instruction to start heating are separated. However, if a target heating time is designated, the heating may be started without waiting for an instruction to start heating. In this case, in the flowchart in FIG. 20, a step that outputs a control signal causing the heating kitchen appliance 230a to start heating as a first control command may be provided after step S2007.

### (Overview of service to be provided)

Hereinafter, an overview of a service provided by a speech-based equipment control system according to an embodiment will be described with reference to the attached drawings.

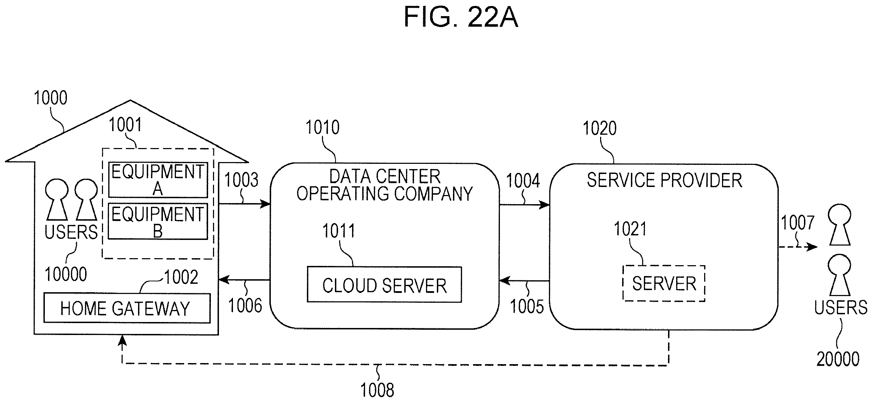

FIG. 22A is a diagram illustrating an overview of a service provided by a speech-based equipment control system according to an embodiment. A speech-based equipment control system is equipped with a group 1000, a data center operating company 1010, and a service provider 1020.

The group 1000 is an organization such as a corporation, association, or home, for example, and may be of any scale. The group 1000 includes plural equipment 1001 including first equipment A and second equipment B, and a home gateway 1002. The plural equipment 1001 includes equipment that is able to connect to the Internet (such as a smartphone, personal computer (PC), or television, for example). The plural equipment 1001 also includes equipment that is unable to connect to the Internet by itself (such as lighting equipment, a washing machine, or a refrigerator, for example). In the present disclosure, the plural equipment 1001 is particularly the water discharging equipment 230 and the heating kitchen appliance 230a. The plural equipment 1001 may also include equipment that, although unable to connect to the Internet by itself, becomes able to connect to the Internet via the home gateway 1002. Also, users 10000 use the plural equipment 1001 inside the group 1000.

The data center operating company 1010 is equipped with a cloud server 1011. The cloud server 1011 is a virtualized server that interacts with various equipment via the Internet. The cloud server 1011 mainly manages information such as big data that is difficult to handle using ordinary database management tools or the like. The data center operating company 1010 conducts activities such as managing data, managing the cloud server 1011, and running a data center used to conduct such management. The role performed by the data center operating company 1010 will be later discussed in detail.

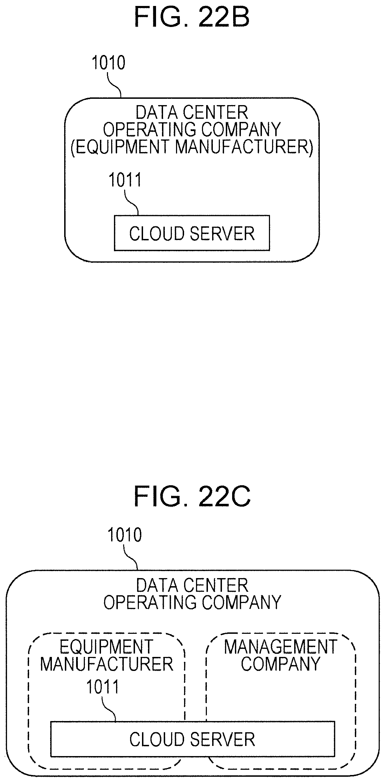

Herein, the data center operating company 1010 is not limited to being a company that only provides data management or management of the cloud server 1011. For example, as illustrated in FIG. 22B, if an equipment manufacturer that develops or fabricates one of the pieces of equipment among the plural equipment 1001 provides data management or management of the cloud server 1011, the equipment manufacturer corresponds to the data center operating company 1010. Also, the data center operating company 1010 is not limited to being a single company. For example, as illustrated in FIG. 22C, if an equipment manufacturer and a management company jointly or separately provide data management or management of the cloud server 1011, either or both correspond to the data center operating company 1010.

The service provider 1020 is equipped with a server 1021. The server 1021 referred to herein may be of any scale, including memory and the like inside an individual user's PC, for example. Also, in some cases the service provider 1020 is not equipped with the server 1021.

Note that in the above speech-based equipment control system, the home gateway 1002 is not strictly required. For example, the home gateway 1002 may be omitted in cases such as the case in which the cloud server 1011 provides total data management. Also, in some cases, equipment unable to connect to the Internet may not exist, such as in the case in which all equipment inside a home is connected to the Internet. In this case, the service provider 1020 is equipped with a separate device that provides the functionality of the server 1021.

Next, a flow of information in the above speech-based equipment control system will be described.

First, the first equipment A and the second equipment B of the group 1000 respectively transmit respective log information to the cloud server 1011 of the data center operating company 1010. The cloud server 1011 collects the log information of the first equipment A and the second equipment B (arrow 1003 in FIG. 22A). Herein, log information refers to information that indicates information such as operating conditions or operating times for the plural equipment 1001, for example. For example, the log information may include viewing history from a television, recording schedule information from a recorder, operating times and amounts of laundry from a washing machine, open/close times from a refrigerator, or an open/close count from a refrigerator. However, the log information is not limited to such information, and may also include various information acquirable from various equipment. Note that the log information may also be provided directly to the cloud server 1011 from the plural equipment 1001 itself via the Internet. Also, log information may be first collected in the home gateway 1002 from the plural equipment 1001, and provided from the home gateway 1002 to the cloud server 1011.

Next, the cloud server 1011 of the data center operating company 1010 provides the service provider 1020 with the collected log information in fixed units. Herein, the fixed units may be units into which the data center operating company 1010 is able to organize and provide collected information to the service provider 1020, or units requested by the service provider 1020. Also, although the log information is provided in "fixed units", the amount of information may not be fixed, and the amount of information to provide may vary according to conditions. Log information is saved in the server 1021 possessed by the service provider 1020 as appropriate (arrow 1004 in FIG. 22A).

Subsequently, the service provider 1020 organizes the log information into information adapted to a service to provide to a user, and provides the organized information to the user. The user provided with information may be a user 10000 who uses the plural equipment 1001, or an external user 20000. The method of providing information to a user 10000 or 20000 may involve providing information directly from the service provider 1020 to a user 10000 or 20000 (arrows 1007 and 1008 in FIG. 22A). The method of providing information to a user 10000 may also involve providing information to a user 10000 after traversing the cloud server 1011 of the data center operating company 1010 again, for example (arrows 1005 and 1006 in FIG. 22A). Additionally, the cloud server 1011 of the data center operating company 1010 may also organize log information into information adapted to a service to provide to a user, and provide the organized information to the service provider 1020.

Note that a user 10000 may be the same as or different from a user 20000.

### (Service category 1: cloud service with self-managed data center)

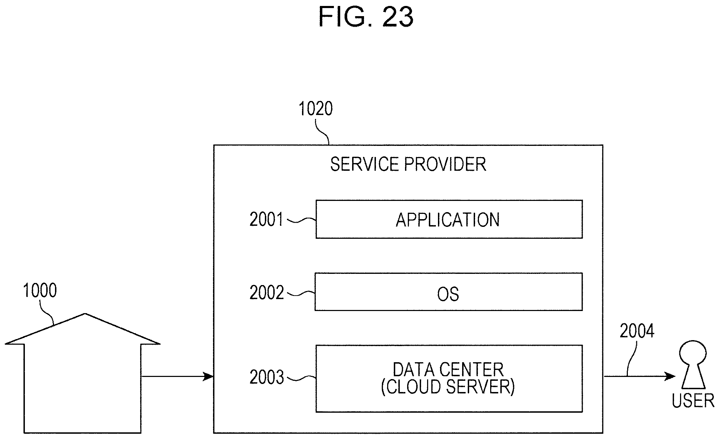

FIG. 23 is a diagram illustrating an overview of a service provided by a speech-based equipment control system according to a service category 1 (a cloud service with a self-managed data center). In this category, the service provider 1020 acquires information from the group 1000, and provides a service to a user. In this category, the service provider 1020 includes the functionality of a data center operating company. In other words, the service provider 1020 possesses a cloud server 1011 that manages big data. Consequently, a data center operating company does not exist.

In this category, the service provider 1020 operates and manages a data center 2003 (cloud server). The service provider 1020 also manages an operating system (OS) 2002 and an application 2001. The service provider 1020 uses the OS 2002 and the application 2001 managed by the service provider 1020 to provide a service to a user (arrow 2004).

### (Service category 2: cloud service utilizing IaaS)

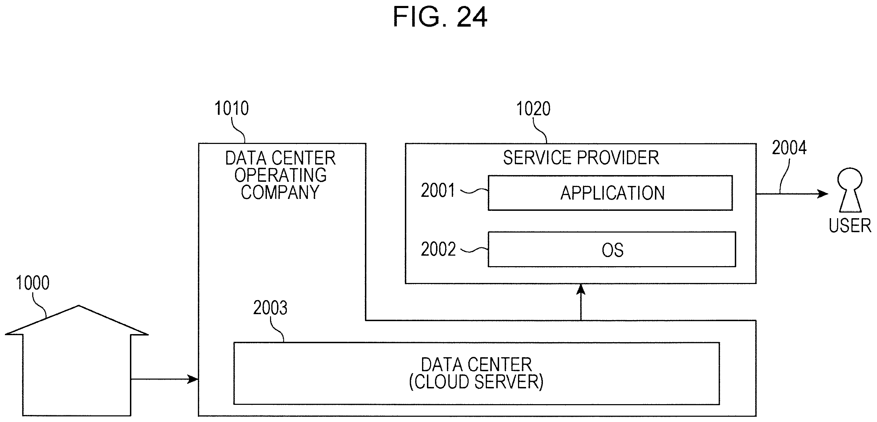

FIG. 24 is a diagram illustrating an overview of a service provided by a speech-based equipment control system according to a service category 2 (a cloud service utilizing IaaS). Herein, IaaS is an acronym for infrastructure as a service, and refers to a cloud service model in which the infrastructure itself for building and running a computer system is provided as a service via the Internet.

In this category, the data center operating company 1010 operates and manages the data center 2003 (cloud server). Meanwhile, the service provider 1020 manages the OS 2002 and the application 2001. The service provider 1020 uses the OS 2002 and the application 2001 managed by the service provider 1020 to provide a service to a user (arrow 2004).

### (Service category 3: cloud service utilizing PaaS)

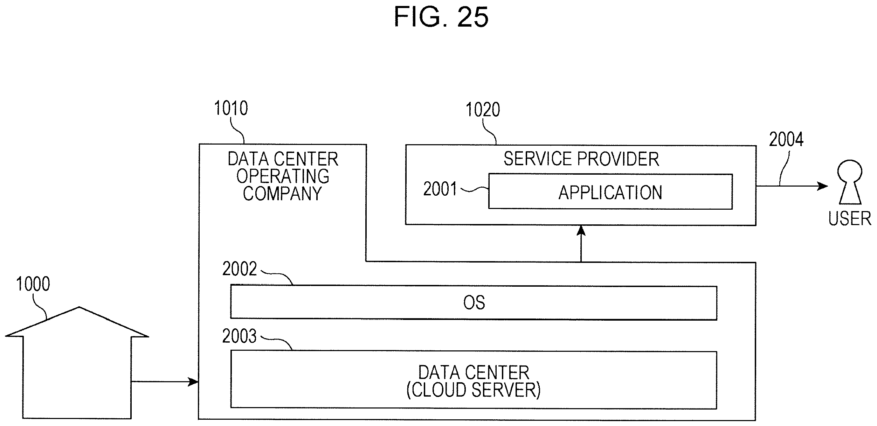

FIG. 25 is a diagram illustrating an overview of a service provided by a speech-based equipment control system according to a service category 3 (a cloud service utilizing PaaS). Herein, PaaS is an acronym for platform as a service, and refers to a cloud service model in which the underlying platform for building and running software is provided as a service via the Internet.

In this category, the data center operating company 1010 manages the OS 2002, and also operates and manages the data center 2003 (cloud server). Meanwhile, the service provider 1020 manages the application 2001. The service provider 1020 uses the OS 2002 managed by the data center operating company 1010 and the application 2001 managed by the service provider 1020 to provide a service to a user (arrow 2004).

### (Service category 4: cloud service utilizing SaaS)

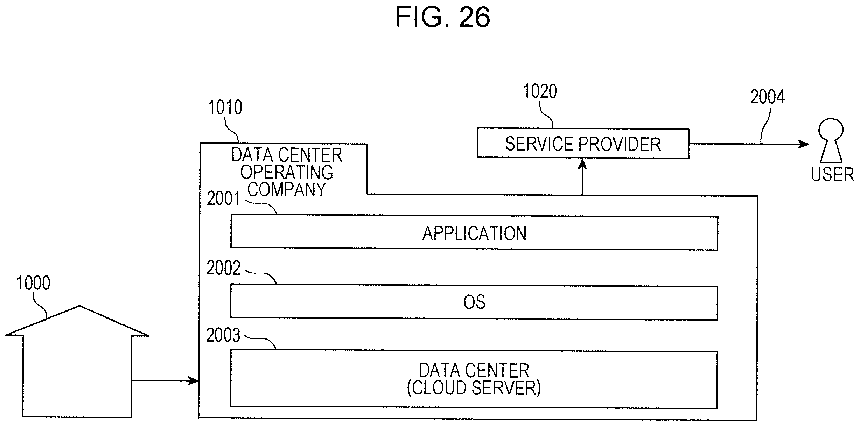

FIG. 26 is a diagram illustrating an overview of a service provided by a speech-based equipment control system according to a service category4 (a cloud service utilizing SaaS). Herein, SaaS is an acronym for software as a service. SaaS is a cloud service model that includes functions enabling a user such as a company or individual who does not possess a data center (cloud server) to use an application provided by a platform provider possessing a data center (cloud server), for example.

In this category, the data center operating company 1010 manages the application 2001, manages the OS 2002, and also operates and manages the data center (cloud server) 2003. Meanwhile, the service provider 1020 uses the OS 2002 and the application 2001 managed by the data center operating company 1010 to provide a service to a user (arrow 2004).

In all of the above cloud service categories, the service provider 1020 provides a service. In addition, the service provider or data center operating company may independently develop software such as the OS, application, or database for big data, or outsource such software to a third party.

### Industrial Applicability

A speech-based operation control device according to the present disclosure is useful as an interface for controlling equipment operations when the user's hands are occupied.

## Claims

1. A method for controlling a supply device according to a user's speech in a speech-based equipment control system including a speech input device (110) that inputs speech and the supply device (130) controlling supply of a prescribed material, the method comprising:
receiving, from a user of the supply device (130) via the speech input device (110), first speech information that expresses a supply instruction causing the supply device (130) to supply the prescribed material of a first specific quantity; and
transmitting to the supply device (130) a first control command for executing a first supply process that supplies the prescribed material of the first specific quantity recognized on the basis of the first speech information;
**characterized by**
periodically measuring a supply quantity of the prescribed material supplied during the execution of the first supply process;
storing a cumulative value of the periodically measured supply quantity;
in a case of receiving second speech information expressing a supply instruction causing the supply device (130) to supply the prescribed material of a second specific quantity different from the first specific quantity from the user of the supply device (130) via the speech input device (110) before the first supply process is complete in the supply device (130), detecting an already-supplied quantity indicating a quantity of the prescribed material that has already been supplied at the time of receiving the second speech information, and comparing the detected already-supplied quantity to a second specific quantity recognized on the basis of the second speech information,
wherein detecting the already-supplied quantity at the time of receiving the second speech information includes retrieving the stored cumulative value of the periodically measured supply quantity at the time of receiving the second speech information; and
if the second specific quantity is judged to be greater than the already-supplied quantity, transmitting to the supply device (130) a second control command for aborting the first supply process and executing a second supply process that supplies the prescribed material until the already-supplied quantity reaches the second specific quantity.

2. The equipment control method according to claim 1, wherein if the second specific quantity is judged to be less than the already-supplied quantity, reporting to the user of the supply device (130) an error message indicating that the second supply process cannot be executed at the supply device (130).

3. The equipment control method according to claim 2, wherein the speech-based equipment control system further includes a display device, and the error message is displayed on the display device.

4. The equipment control method according to claim 2, wherein the speech-based equipment control system further includes a speech output device configured to output speech, and the error message is reported to the user of the supply device (130) using the speech output device.

5. The equipment control method according to claim 1, wherein if the already-supplied quantity and the second specific quantity are the same, a third control command is transmitted to the supply device, the third control command being for stopping a supply process of the prescribed material based on the first control command.

6. The equipment control method according to claim 1, wherein the prescribed material includes a liquid.

7. The equipment control method according to claim 1, wherein the prescribed material includes a powdered or granular material.

8. The equipment control method according to claim 1, wherein the prescribed material includes a material in a paste-like form.

9. The equipment control method according to claim 1, wherein the supply device includes a faucet device, and the prescribed material includes water.

10. A speech-based equipment control system, comprising:
a speech input device (110) adapted to input speech;
a supply device (130) adapted to control supply of a prescribed material and
a server (120) connectable to the speech input device (110) and the supply device (130);
wherein the speech-based equipment control system is adapted to control the supply device (130) according to a user's speech,
the speech input device (110) includes
a speech input unit (101) adapted to acquire first speech information expressing a supply instruction causing the supply device (130) to supply the prescribed material of a first specific quantity, and second speech information expressing a supply instruction causing the supply device (130) to supply the prescribed material of a second specific quantity different from the first specific quantity, and
a first communication unit (301) adapted to transmit the acquired first speech information and second speech information to the server (120),
the supply device (130) includes
a second communication unit (304) adapted to receive from the server (120) a first control command for executing a first supply process that supplies the prescribed material of the first specific quantity recognized on the basis of the first speech information, and
a control unit (107) adapted to cause execution of the first supply process indicated by the received first control command, and
the server (120) includes
a third communication unit (302) adapted to receive the first speech information and the second speech information from the speech input device (110), and
a fourth communication unit (303) adapted to transmit to the supply device (130) the first control command;
**characterized in that**
the supply device (130) includes an operating quantity measurement unit (106) adapted to periodically measure a supply quantity of the prescribed material supplied during the execution of the first supply process;
the server (120) further includes
a current operating quantity storage unit (105) adapted to store a cumulative value of the supply quantity periodically measured by the operating quantity measurement unit (106),
a judgment unit (103) adapted, in a case of receiving second speech information expressing a supply instruction causing the supply device (130) to supply the prescribed material of a second specific quantity different from the first specific quantity from the user via the speech input device (110) before the first supply process is complete in the supply device (130), to detect an quantity indicating a quantity of the prescribed material that has already been supplied at the time of receiving the second speech information, to compare the detected already-supplied quantity to a second specific quantity recognized on the basis of the second speech information, and to judge which is greater,
wherein the judgment unit (103) is adapted to detect the quantity at the time of receiving the second speech information by retrieving it from the current operating quantity storage unit (105), and
a fifth communication unit (303) adapted, if the second specific quantity is judged to be greater than the quantity, to transmit to the supply device (130) a second control command for aborting the first supply process and executing a second supply process that supplies the prescribed material until the quantity reaches the second specific quantity.

11. A supply device used in the speech-based equipment control system of claim 10.

12. A method for controlling electric equipment according to a user's speech in a speech-based equipment control system including a speech input device (210) that inputs speech and the electric equipment (230a) operating according to a designated operating time, the method comprising:
receiving, from a user of the electric equipment (230a) via the speech input device (210), first speech information that expresses an operating instruction causing the electric equipment (230a) to operate for a first operating time; and
transmitting to the electric equipment (230a) a first control command for executing a first operating process that causes the electric equipment (230a) to operate for the first operating time recognized on the basis of the first speech information;
**characterized by**
starting a count of the elapsed time of the first operating process and reporting an increment of the elapsed time at a prescribed reporting interval;
storing a cumulative value of increments reported every reporting interval;
in a case of receiving second speech information expressing an operating instruction causing the electric equipment (230a) to operate for a second operating time different from the first operating time from the user of the electric equipment (230a) via the speech input device (210) before the first operating process is complete in the electric equipment (230a), detecting an elapsed operating time of the electric equipment (230a) at the time of receiving the second speech information on the basis of the stored cumulative value, and comparing the detected elapsed operating time to a second operating time recognized on the basis of the second speech information; and
if the second operating time is judged to be greater than the elapsed operating time, transmitting to the electric equipment (230a) a second control command for aborting the first operating process and executing a second operating process that causes the electric equipment (230a) to operate until the elapsed operating time reaches the second operating time.

13. The equipment control method according to claim 12, wherein if the second operating time is judged to be less than the elapsed operating time, reporting to the user of the electric equipment (230a) an error message indicating that the second operating process cannot be executed at the electric equipment (230a).

14. The equipment control method according to claim 13, wherein the speech-based equipment control system further includes a display device, and the error message is displayed on the display device.

15. The equipment control method according to claim 13, wherein the speech-based equipment control system further includes a speech output device configured to output speech, and the error message is reported to the user of the electric equipment (230a) using the speech output device.

16. A speech-based equipment control system, comprising:
a speech input device (210) adapted to input speech;
electric equipment (230a) adapted to operate according to a designated operating time; and
a server (220) connectable to the speech input device (210) and the electric equipment (230a);
wherein the speech-based equipment control system is adapted to control the electric equipment (230a) according to a user's speech,
the speech input device (210) includes
a speech acquisition unit (201) adapted to acquire first speech information expressing an operating instruction causing the electric equipment (230a) to operate for a first operating time, and second speech information expressing an operating instruction causing the electric equipment (230a) to operate for a second operating time different from the first operating time, and
a first communication unit (401) adapted to transmit the acquired first speech information and second speech information to the server (220);
the electric equipment (230a) includes
a second communication unit (404) adapted to receive from the server a first control command for executing a first operating process that causes the electric equipment (230a) to operate for the first operating time recognized on the basis of the first speech information, and
a control unit (207a) adapted to cause execution of the first operating process indicated by the received first control command, and
the server (220) includes
a third communication unit (402) adapted to receive the first speech information and the second speech information from the speech input device (210), and
a fourth communication unit (403) adapted to transmit to the electric equipment (230a) the first control command;
**characterized in that**
the electric equipment (230a) further includes a timer (206a) adapted to start a count of the elapsed time of the first operating process and to report an increment of the elapsed time at a prescribed reporting interval;
the server (220) further includes
an elapsed time storage unit (205a) adapted to store a cumulative value of increments reported every reporting interval by the timer (206a);
a judgment unit (203a) adapted, in a case of receiving second speech information expressing an operating instruction causing the electric equipment (230a) to operate for a second operating time different from the first operating time from the user via the speech input device (210) before the first operating process is complete in the electric equipment (230a), to detect an elapsed operating time of the electric equipment (230a) at the time of receiving the second speech information on the basis of the cumulative value stored in the elapsed time storage unit (205a), to compare the detected elapsed operating time to a second operating time recognized on the basis of the second speech information, and to judge which is greater, and
a fifth communication unit (403)adapted, if the second operating time is judged to be greater than the elapsed operating time, to transmit to the electric equipment (230a) a second control command for aborting the first operating process and executing a second operating process that causes the electric equipment (230a) to operate until the elapsed operating time reaches the second operating time.

## Patentansprüche

1. Verfahren zum Steuern einer Zufuhrvorrichtung entsprechend der Sprache eines Benutzers in einem sprachbasierten Anlagensteuerungssystem, das eine Spracheingabevorrichtung (110) beinhaltet, die Sprache eingibt, und die Zufuhrvorrichtung (130), welche die Zufuhr eines vorgeschriebenen Materials steuert, wobei das Verfahren umfasst:
Empfangen, von einem Benutzer der Zufuhrvorrichtung (130) über die Spracheingabevorrichtung (110), von ersten Sprachinformationen, die einen Zufuhrbefehl ausdrücken, der die Zufuhrvorrichtung (130) dazu veranlasst, das vorgeschriebene Material mit einer ersten bestimmten Menge zuzuführen; und
Senden, an die Zufuhrvorrichtung (130), eines ersten Steuerbefehls zum Ausführen eines ersten Zufuhrprozesses, der das vorgeschriebene Material der ersten bestimmten Menge zuführt, die auf der Basis der ersten Sprachinformationen erkannt wird;
**gekennzeichnet durch**
periodisches Messen einer Zufuhrmenge des zugeführten vorgeschriebenen Materials während der Ausführung des ersten Zufuhrprozesses;
Speichern eines kumulativen Werts der periodisch gemessenen Zufuhrmenge;
beim Empfangen von zweiten Sprachinformationen, die einen Zufuhrbefehl ausdrücken, der die Zufuhrvorrichtung (130) zur Zufuhr des vorgeschriebenen Materials in einer zweiten bestimmten Menge veranlasst, die sich von der ersten bestimmten Menge unterscheidet, von dem Benutzer der Zufuhrvorrichtung (130) über die Spracheingabevorrichtung (110), bevor der erste Zufuhrprozess in der Zufuhrvorrichtung (130) abgeschlossen ist, Ermitteln einer bereits zugeführten Menge, welche eine Menge des vorgeschriebenen Materials anzeigt, das zum Zeitpunkt des Empfangs der zweiten Sprachinformationen bereits zugeführt wurde, und Vergleichen der ermittelten bereits zugeführten Menge mit einer zweiten bestimmten Menge, die auf der Basis der zweiten Sprachinformationen erkannt wird,
wobei das Ermitteln der bereits zugeführten Menge zum Zeitpunkt des Empfangs der zweiten Sprachinformationen das Abrufen des gespeicherten kumulativen Werts der periodisch gemessenen Zufuhrmenge zum Zeitpunkt des Empfangs der zweiten Sprachinformationen beinhaltet; und
wenn die zweite bestimmte Menge als größer als die bereits zugeführte Menge beurteilt wird, Senden, an die Zufuhrvorrichtung (130), eines zweiten Steuerbefehls zum Abbrechen des ersten Zufuhrprozesses und zum Ausführen eines zweiten Zufuhrprozesses, der das vorgeschriebene Material zuführt, bis die bereits zugeführte Menge die zweite bestimmte Menge erreicht.

2. Anlagensteuerungsverfahren nach Anspruch 1, wobei, wenn die zweite bestimmte Menge als kleiner als die bereits zugeführte Menge beurteilt wird, Melden, an den Benutzer der Zufuhrvorrichtung (130), einer Fehlermeldung, die anzeigt, dass der zweite Zufuhrprozess auf der Zufuhrvorrichtung (130) nicht ausgeführt werden kann.

3. Anlagensteuerungsverfahren nach Anspruch 2, wobei das sprachbasierte Anlagensteuerungssystem des Weiteren eine Anzeigevorrichtung beinhaltet, und die Fehlermeldung auf der Anzeigevorrichtung angezeigt wird.

4. Anlagensteuerungsverfahren nach Anspruch 2, wobei das sprachbasierte Anlagensteuerungssystem des Weiteren eine Sprachausgabevorrichtung beinhaltet, die dazu konfiguriert ist, Sprache auszugeben, und die Fehlermeldung dem Benutzer der Zufuhrvorrichtung (130) unter Verwendung der Sprachausgabevorrichtung gemeldet wird.

5. Anlagensteuerungsverfahren nach Anspruch 1, wobei, wenn die bereits zugeführte Menge und die zweite bestimmte Menge gleich sind, ein dritter Steuerbefehl an die Zufuhrvorrichtung gesendet wird, wobei der dritte Steuerbefehl dazu dient, einen Zufuhrprozess des vorgeschriebenen Materials basierend auf dem ersten Steuerbefehl zu stoppen.

6. Anlagensteuerungsverfahren nach Anspruch 1, wobei das vorgeschriebene Material eine Flüssigkeit beinhaltet.

7. Anlagensteuerungsverfahren nach Anspruch 1, wobei das vorgeschriebene Material ein Pulver oder Granulat beinhaltet.

8. Anlagensteuerungsverfahren nach Anspruch 1, wobei das vorgeschriebene Material ein Material in pastenähnlicher Form beinhaltet.

9. Anlagensteuerungsverfahren nach Anspruch 1, wobei die Zufuhrvorrichtung eine Hahnvorrichtung beinhaltet, und das vorgeschriebene Material Wasser beinhaltet.

10. Sprachbasiertes Anlagensteuerungssystem, umfassend:
eine Spracheingabevorrichtung (110), die für die Spracheingabe eingerichtet ist;
eine Zufuhrvorrichtung (130), die dazu eingerichtet ist, die Zufuhr eines vorgeschriebenen Materials zu steuern; und
einen Server (120), der mit der Spracheingabevorrichtung (110) und der Zufuhrvorrichtung (130) verbindbar ist;
wobei das sprachbasierte Anlagensteuerungssystem dazu eingerichtet ist, die Zufuhrvorrichtung (130) entsprechend der Sprache eines Benutzers zu steuern,
wobei die Spracheingabevorrichtung (110) beinhaltet
eine Spracheingabeeinheit (101), die zum Erfassen von ersten Sprachinformationen eingerichtet ist, welche einen Zufuhrbefehl ausdrücken, der die Zufuhrvorrichtung (130) dazu veranlasst, das vorgeschriebene Material mit der ersten bestimmten Menge zuzuführen, und von zweiten Sprachinformationen, die einen Zufuhrbefehl ausdrücken, der die Zufuhrvorrichtung (130) dazu veranlasst, das vorgeschriebene Material mit einer zweiten bestimmten Menge zuzuführen, die sich von der ersten bestimmten Menge unterscheidet, und
eine erste Kommunikationseinheit (301), die dazu eingerichtet ist, die erfassten ersten Sprachinformationen und zweiten Sprachinformationen an den Server (120) zu senden,
wobei die Zufuhrvorrichtung (130) beinhaltet
eine zweite Kommunikationseinheit (304) die dazu eingerichtet ist, von dem Server (120) einen ersten Steuerbefehl zum Ausführen eines ersten Zufuhrprozesses zu empfangen, der das vorgeschriebene Material der ersten bestimmten Menge zuführt, die auf der Basis der ersten Sprachinformationen erkannt wird, und
eine Steuereinheit (107), die dazu eingerichtet ist, die Ausführung des ersten Zufuhrprozesses zu veranlassen, der von dem ersten empfangenen Steuerbefehl angezeigt wird, und
wobei der Server (120) beinhaltet
eine dritte Kommunikationseinheit (302), die dazu eingerichtet ist, die ersten Sprachinformationen und zweiten Sprachinformationen von der Spracheingabevorrichtung (110) zu empfangen, und
eine vierte Kommunikationseinheit (303) die dazu eingerichtet ist, den ersten Steuerbefehl an die Zufuhrvorrichtung (130) zu senden;
**dadurch gekennzeichnet, dass**
die Zufuhrvorrichtung (130) eine Betriebsmengen-Messeinheit (106) beinhaltet, die dazu eingerichtet ist, periodisch eine Zufuhrmenge des vorgeschriebenen Materials zu messen, das während der Ausführung des ersten Zufuhrprozesses zugeführt wird;
wobei der Server (120) des Weiteren beinhaltet
eine Speichereinheit (105) für die aktuelle Betriebsmenge, die dazu eingerichtet ist, einen kumulativen Wert der Betriebsmenge zu speichern, der periodisch von der Betriebsmengen-Messeinheit (106) gemessen wird,
eine Beurteilungseinheit (103), die dazu eingerichtet ist, beim Empfangen von zweiten Sprachinformationen, die einen Zufuhrbefehl ausdrücken, der die Zufuhrvorrichtung (130) zur Zufuhr des vorgeschriebenen Materials in einer zweiten bestimmten Menge veranlasst, die sich von der ersten bestimmten Menge unterscheidet, von dem Benutzer der Zufuhrvorrichtung (130) über die Spracheingabevorrichtung (110), bevor der erste Zufuhrprozess in der Zufuhrvorrichtung (130) abgeschlossen ist, eine bereits zugeführte Menge zu ermitteln, welche eine Menge des vorgeschriebenen Materials anzeigt, das zum Zeitpunkt des Empfangs der zweiten Sprachinformationen bereits zugeführt wurde, und die ermittelte bereits zugeführte Menge mit einer zweiten bestimmten Menge zu vergleichen, die auf der Basis der zweiten Sprachinformationen erkannt wird, und zu beurteilen, welche größer ist,
wobei die Beurteilungseinheit (103) dazu eingerichtet ist, die bereits zugeführte Menge zu dem Zeitpunkt des Empfangs der zweiten Sprachinformationen durch Abrufen dieser aus der Speichereinheit (105) für die aktuelle Betriebsmenge zu ermitteln, und
eine fünfte Kommunikationseinheit (303), die dazu eingerichtet ist, wenn die zweite bestimmte Menge als größer als die bereits zugeführte Menge beurteilt wird, an die Zufuhrvorrichtung (130) einen zweiten Steuerbefehl zum Abbrechen des ersten Zufuhrprozesses und zum Ausführen eines zweiten Zufuhrprozesses zu senden, der das vorgeschriebene Material zuführt, bis die bereits zugeführte Menge die zweite bestimmte Menge erreicht.

11. Zufuhrvorrichtung zur Verwendung in dem sprachbasierten Anlagensteuerungssystem nach Anspruch 10.

12. Verfahren zum Steuern einer elektrischen Anlage entsprechend der Sprache eines Benutzers in einem sprachbasierten Anlagensteuerungssystem, das eine Spracheingabevorrichtung (210) beinhaltet, die Sprache eingibt, wobei die elektrische Anlage (230a) gemäß einer festgelegten Betriebszeit arbeitet, wobei das Verfahren umfasst:
Empfangen, von einem Benutzer der elektrischen Anlage (230a) über die Spracheingabevorrichtung (210), von ersten Sprachinformationen, die einen Betriebsbefehl ausdrücken, der die elektrische Anlage (230a) dazu veranlasst, während einer ersten Betriebszeit zu arbeiten; und
Senden, an die elektrische Anlage (230a), eines ersten Steuerbefehls zum Ausführen eines ersten Betriebsprozesses, der die elektrische Anlage (230a) dazu veranlasst, während der ersten Betriebszeit zu arbeiten, die auf der Basis der ersten Sprachinformationen erkannt wird;
**gekennzeichnet durch**
Starten eines Zählers der verstrichenen Zeit des ersten Betriebsprozesses und Melden eines Zuwachses der verstrichenen Zeit in einem vorgeschriebenen Meldeintervall;
Speichern eines kumulativen Werts des in jedem Meldeintervall gemeldeten Zuwachses;
beim Empfangen von zweiten Sprachinformationen, die einen Betriebsbefehl ausdrücken, der die elektrische Anlage (230a) zum Betrieb während einer zweiten Betriebszeit veranlasst, die sich von der ersten Betriebszeit unterscheidet, von dem Benutzer der elektrischen Anlage (230a) über die Spracheingabevorrichtung (210), bevor der erste Betriebsprozess in der elektrischen Anlage (230a) abgeschlossen ist, Ermitteln einer verstrichenen Betriebszeit der elektrischen Anlage (230a) zum Zeitpunkt des Empfangs der zweiten Sprachinformationen auf der Basis des gespeicherten kumulativen Werts, und Vergleichen der ermittelten verstrichenen Betriebszeit mit einer zweiten Betriebszeit, die auf der Basis der zweiten Sprachinformationen erkannt wird; und
wenn die zweite Betriebszeit als größer als die verstrichene Betriebszeit beurteilt wird, Senden, an die elektrische Anlage (230a), eines zweiten Steuerbefehls zum Abbrechen des ersten Betriebsprozesses und zum Ausführen eines zweiten Betriebsprozesses, der die elektrische Anlage (230a) zum Betrieb veranlasst, bis die verstrichene Betriebszeit die zweite Betriebszeit erreicht.

13. Anlagensteuerungsverfahren nach Anspruch 12, wobei, wenn die zweite Betriebszeit als kleiner als die verstrichene Betriebszeit beurteilt wird, Melden, an den Benutzer der elektrischen Anlage (230a), einer Fehlermeldung, die anzeigt, dass der zweite Betriebsprozess auf der elektrischen Anlage (230a) nicht ausgeführt werden kann.

14. Anlagensteuerungsverfahren nach Anspruch 13, wobei das sprachbasierte Anlagensteuerungssystem des Weiteren eine Anzeigevorrichtung beinhaltet, und die Fehlermeldung auf der Anzeigevorrichtung angezeigt wird.

15. Anlagensteuerungsverfahren nach Anspruch 13, wobei das sprachbasierte Anlagensteuerungssystem des Weiteren eine Sprachausgabevorrichtung beinhaltet, die dazu konfiguriert ist, Sprache auszugeben, und die Fehlermeldung dem Benutzer der elektrischen Anlage (230a) unter Verwendung der Sprachausgabevorrichtung gemeldet wird.

16. Sprachbasiertes Anlagensteuerungssystem, umfassend:
eine Spracheingabevorrichtung (210), die für die Spracheingabe eingerichtet ist;
eine elektrische Anlage (230a), die dazu eingerichtet ist, gemäß einer festgelegten Betriebszeit zu arbeiten; und
einen Server (220), der mit der Spracheingabevorrichtung (210) und der elektrischen Anlage (230a) verbindbar ist;
wobei das sprachbasierte Anlagensteuerungssystem dazu eingerichtet ist, die elektrische Anlage (230a) entsprechend der Sprache eines Benutzers zu steuern,
wobei die Spracheingabevorrichtung (210) beinhaltet
eine Spracherfassungseinheit (201), die dazu eingerichtet ist, erste Sprachinformationen zu erfassen, die einen Betriebsbefehl ausdrücken, der die elektrische Anlage (230a) zum Betrieb während einer ersten Betriebszeit veranlasst, und zweite Sprachinformationen, die einen Betriebsbefehl ausdrücken, der die elektrische Anlage (230a) zum Betrieb während einer zweiten Betriebszeit veranlassen, die sich von der ersten Betriebszeit unterscheidet, und
eine erste Kommunikationseinheit (401), die dazu eingerichtet ist, die erfassten ersten Sprachinformationen und zweiten Sprachinformationen an den Server (220) zu senden;
wobei die elektrische Anlage (230a) beinhaltet
eine zweite Kommunikationseinheit (404) die dazu eingerichtet ist, von dem Server einen ersten Steuerbefehl zum Ausführen eines ersten Betriebsprozesses zu empfangen, der die elektrische Anlage (230a) zum Betrieb während der ersten Betriebszeit veranlasst, die auf der Basis der ersten Sprachinformationen erkannt wird, und
eine Steuereinheit (207a), die dazu eingerichtet ist, die Ausführung des ersten Betriebsprozesses zu veranlassen, der von dem ersten empfangenen Steuerbefehl angezeigt wird, und
wobei der Server (220) beinhaltet
eine dritte Kommunikationseinheit (402), die dazu eingerichtet ist, die ersten Sprachinformationen und zweiten Sprachinformationen von der Spracheingabevorrichtung (210) zu empfangen, und
eine vierte Kommunikationseinheit (403) die dazu eingerichtet ist, den ersten Steuerbefehl an die elektrische Anlage (230a) zu senden;
**dadurch gekennzeichnet, dass**
die elektrische Anlage (230a) des Weiteren einen Zeitgeber beinhaltet, der dazu eingerichtet ist, einen Zähler der verstrichenen Zeit des ersten Betriebsprozesses zu starten und einen Zuwachs der verstrichenen Zeit in einem vorgeschriebenen Meldeintervall zu melden;
wobei der Server (220) des Weiteren beinhaltet
eine Speichereinheit (205a) für die verstrichene Zeit, die dazu eingerichtet ist, einen kumulativen Wert des in jedem Meldeintervall von dem Zeitgeber (206a) gemeldeten Zuwachses zu speichern;
eine Beurteilungseinheit (203a), die dazu eingerichtet ist, beim Empfangen von zweiten Sprachinformationen, die einen Betriebsbefehl ausdrücken, der die elektrische Anlage (230a) zum Betrieb während einer zweiten Betriebszeit veranlasst, die sich von der ersten Betriebszeit unterscheidet, von dem Benutzer der elektrischen Anlage (230a) über die Spracheingabevorrichtung (210), bevor der erste Betriebsprozess in der elektrischen Anlage (230a) abgeschlossen ist, eine verstrichene Betriebszeit der elektrischen Anlage (230a) zum Zeitpunkt des Empfangs der zweiten Sprachinformationen auf der Basis des gespeicherten kumulativen Werts zu ermitteln, die ermittelte verstrichene Betriebszeit mit einer zweiten Betriebszeit zu vergleichen, die auf der Basis der zweiten Sprachinformationen erkannt wird, und zu beurteilen, welche größer ist, und
eine fünfte Kommunikationseinheit (403), die dazu eingerichtet ist, wenn die zweite Betriebszeit als größer als die verstrichene Betriebszeit beurteilt wird, an die elektrische Anlage (230a) einen zweiten Steuerbefehl zum Abbrechen des ersten Betriebsprozesses und zum Ausführen eines zweiten Betriebsprozesses zu senden, der die elektrische Anlage (230a) zum Betrieb veranlasst, bis die verstrichene Betriebszeit die zweite Betriebszeit erreicht.

## Revendications

1. Procédé pour contrôler un dispositif de distribution conformément aux signaux vocaux d'un utilisateur dans un système de contrôle d'équipement à commande vocale incluant un dispositif d'entrée vocale (110) qui entre des signaux vocaux et le dispositif de distribution (130) contrôlant la distribution d'un matériau prescrit, le procédé comprenant les étapes consistant à :
recevoir, de la part d'un utilisateur du dispositif de distribution (130) via le dispositif d'entrée vocale (110), des premières informations vocales qui expriment une instruction de distribution indiquant au dispositif de distribution (130) de distribuer le matériau prescrit dans une première quantité spécifique ; et
transmettre au dispositif de distribution (130) une première commande de contrôle pour exécuter un premier processus de distribution qui distribue le matériau prescrit dans la première quantité spécifique reconnue sur la base des premières informations vocales ;
**caractérisé par les étapes consistant à**
mesurer périodiquement une quantité distribuée du matériau prescrit distribué au cours de l'exécution du premier processus de distribution ;
stocker une valeur cumulative de la quantité distribuée mesurée périodiquement ;
dans un cas où des deuxièmes informations vocales, qui expriment une instruction de distribution indiquant au dispositif de distribution (130) de distribuer le matériau prescrit dans une deuxième quantité spécifique différente de la première quantité spécifique, avant que le premier processus de distribution ne soit achevé dans le dispositif de distribution (130), sont reçues de la part de l'utilisateur du dispositif de distribution (130) via le dispositif d'entrée vocale (110), détecter une quantité déjà distribuée indiquant une quantité du matériau prescrit qui a déjà été distribuée au moment de la réception des deuxièmes informations vocales, et comparer la quantité déjà distribuée détectée avec une deuxième quantité spécifique reconnue sur la base des deuxièmes informations vocales,
où la détection de la quantité déjà distribuée au moment de la réception des deuxièmes informations vocales inclut la récupération de la valeur cumulative stockée de la quantité distribuée mesurée périodiquement au moment de la réception des deuxièmes informations vocales ; et
si la deuxième quantité spécifique est jugée plus grande que la quantité déjà distribuée, transmettre au dispositif de distribution (130) une deuxième commande de contrôle pour interrompre le premier processus de distribution et exécuter un deuxième processus de distribution qui distribue le matériau prescrit jusqu'à ce que la quantité déjà distribuée atteigne la deuxième quantité spécifique.

2. Procédé de contrôle d'équipement selon la revendication 1, où si la deuxième quantité spécifique est jugée plus petite que la quantité déjà distribuée, un message d'erreur est rapporté à l'utilisateur du dispositif de distribution (130) indiquant que le deuxième processus de distribution ne peut pas être exécuté au niveau du dispositif de distribution (130).

3. Procédé de contrôle d'équipement selon la revendication 2, où le système de contrôle d'équipement à commande vocale inclut en outre un dispositif d'affichage, et le message d'erreur est affiché sur le dispositif d'affichage.

4. Procédé de contrôle d'équipement selon la revendication 2, où le système de contrôle d'équipement à commande vocale inclut en outre un dispositif de sortie vocale conçu pour délivrer un message vocal, et le message d'erreur est rapporté à l'utilisateur du dispositif de distribution (130) en utilisant le dispositif de sortie vocale.

5. Procédé de contrôle d'équipement selon la revendication 1, où si la quantité déjà distribuée et la deuxième quantité spécifique sont identiques, une troisième commande de contrôle est transmise au dispositif de distribution, la troisième commande de contrôle étant destinée à interrompre un processus de distribution du matériau prescrit sur la base de la première commande de contrôle.

6. Procédé de contrôle d'équipement selon la revendication 1, où le matériau prescrit inclut un liquide.

7. Procédé de contrôle d'équipement selon la revendication 1, où le matériau prescrit inclut un matériau en poudre ou granulé.

8. Procédé de contrôle d'équipement selon la revendication 1, où le matériau prescrit inclut un matériau sous forme de pâte.

9. Procédé de contrôle d'équipement selon la revendication 1, où le dispositif de distribution inclut un dispositif de robinet, et le matériau prescrit inclut l'eau.

10. Système de contrôle d'équipement à commande vocale, comprenant :
un dispositif d'entrée vocale (110) adapté pour entrer des signaux vocaux ;
un dispositif de distribution (130) adapté pour contrôler la distribution d'un matériau prescrit ; et
un serveur (120) apte à être connecté au dispositif d'entrée vocale (110) et au dispositif de distribution (130) ;
où le système de contrôle d'équipement à commande vocale est adapté pour contrôler le dispositif de distribution (130) conformément aux signaux vocaux d'un utilisateur,
le dispositif d'entrée vocale (110) inclut
une unité d'entrée de signaux vocaux (101) adaptée pour acquérir des premières informations vocales exprimant une instruction de distribution indiquant au dispositif de distribution (130) de distribuer le matériau prescrit dans une première quantité spécifique, et des deuxièmes informations vocales, exprimant une instruction de distribution indiquant au dispositif de distribution (130) de distribuer le matériau prescrit dans une deuxième quantité spécifique différente de la première quantité spécifique, et
une première unité de communication (301) adaptée pour transmettre au serveur (120) les premières informations vocales et les deuxièmes informations vocales acquises,
le dispositif de distribution (130) inclut
une deuxième unité de communication (304) adaptée pour recevoir, en provenance du serveur (120), une première commande de contrôle pour exécuter un premier processus de distribution qui distribue le matériau prescrit dans la première quantité spécifique reconnue sur la base des premières informations vocales, et
une unité de contrôle (107) adaptée pour occasionner l'exécution du premier processus de distribution indiqué par la première commande de contrôle reçue, et
le serveur (120) inclut
une troisième unité de communication (302) adaptée pour recevoir les premières informations vocales et les deuxièmes informations vocales en provenance du dispositif d'entrée vocale (110), et
une quatrième unité de communication (303) adaptée pour transmettre au dispositif de distribution (130) la première commande de contrôle ;
**caractérisé en ce que**
le dispositif de distribution (130) inclut une unité de mesure de quantité de fonctionnement (106) adaptée pour mesurer périodiquement une quantité distribuée du matériau prescrit distribué au cours de l'exécution du premier processus de distribution ;
le serveur (120) inclut en outre
une unité de stockage de quantité de fonctionnement actuelle (105) adaptée pour stocker une valeur cumulative de la quantité distribuée mesurée périodiquement par l'unité de mesure de quantité de fonctionnement (106),
une unité d'évaluation (103) adaptée, dans un cas où des deuxièmes informations vocales qui expriment une instruction de distribution indiquant au dispositif de distribution (130) de distribuer le matériau prescrit dans une deuxième quantité spécifique différente de la première quantité spécifique, avant que le premier processus de distribution ne soit achevé dans le dispositif de distribution (130), sont reçues de la part de l'utilisateur via le dispositif d'entrée vocale (110), pour détecter une quantité déjà distribuée indiquant une quantité du matériau prescrit qui a déjà été distribuée au moment de la réception des deuxièmes informations vocales, pour comparer la quantité déjà distribuée détectée avec une deuxième quantité spécifique reconnue sur la base des deuxièmes informations vocales, et pour évaluer laquelle est la plus grande,
où l'unité d'évaluation (103) est adaptée pour détecter la quantité déjà distribuée au moment de la réception des deuxièmes informations vocales en la récupérant dans l'unité de stockage de quantité de fonctionnement actuelle (105), et
une cinquième unité de communication (303) adaptée pour transmettre au dispositif de distribution (130) une deuxième commande de contrôle pour interrompre le premier processus de distribution et exécuter un deuxième processus de distribution qui distribue le matériau prescrit jusqu'à ce que la quantité déjà distribuée atteigne la deuxième quantité spécifique, si la deuxième quantité spécifique est jugée plus grande que la quantité déjà distribuée.

11. Dispositif de distribution utilisé dans le système de contrôle d'équipement à commande vocale de la revendication 10.

12. Procédé pour contrôler un équipement électrique conformément aux signaux vocaux d'un utilisateur dans un système de contrôle d'équipement à commande vocale incluant un dispositif d'entrée vocale (210) qui entre des signaux vocaux et l'équipement électrique (230a) fonctionnant conformément à un temps de fonctionnement désigné, le procédé comprenant les étapes consistant à :
recevoir, de la part d'un utilisateur de l'équipement électrique (230a) via le dispositif d'entrée vocale (210), des premières informations vocales qui expriment une instruction de fonctionnement indiquant à l'équipement électrique (230a) de fonctionner pendant un premier temps de fonctionnement ; et
transmettre à l'équipement électrique (230a) une première commande de contrôle pour exécuter un premier processus de fonctionnement qui indique à l'équipement électrique (230a) de fonctionner pendant un premier temps de fonctionnement reconnu sur la base des premières informations vocales ;
**caractérisé par les étapes consistant à**
démarrer un compte du temps écoulé du premier processus de fonctionnement et rapporter un incrément du temps écoulé selon un intervalle de rapport prescrit ;
stocker une valeur cumulative des incréments rapportés à chaque intervalle de rapport ;
dans un cas où des deuxièmes informations vocales, qui expriment une instruction de fonctionnement indiquant à l'équipement électrique (230a) de fonctionner pendant un deuxième temps de fonctionnement différent du premier temps de fonctionnement avant que le premier processus de fonctionnement ne soit achevé dans l'équipement électrique (230a), sont reçues de la part d'un utilisateur de l'équipement électrique (230a) via le dispositif d'entrée vocale (210), détecter un temps de fonctionnement de l'équipement électrique (230a) écoulé au moment de la réception des deuxièmes informations vocales sur la base de la valeur cumulative stockée, et comparer le temps de fonctionnement écoulé détecté à un deuxième temps de fonctionnement reconnu sur la base des deuxièmes informations vocales ; et
si le deuxième temps de fonctionnement est jugé plus long que le temps de fonctionnement écoulé, transmettre à l'équipement électrique (230a) une deuxième commande de contrôle pour interrompre le premier processus de fonctionnement et exécuter un deuxième processus de fonctionnement qui indique à l'équipement électrique (230a) de fonctionner jusqu'à ce que le temps de fonctionnement écoulé atteigne le deuxième temps de fonctionnement.

13. Procédé de contrôle d'équipement selon la revendication 12,
où si le deuxième temps de fonctionnement est jugé plus court que le temps de fonctionnement écoulé, un message d'erreur est rapporté à l'utilisateur de l'équipement électrique (230a), indiquant que le deuxième processus de fonctionnement ne peut pas être exécuté au niveau de l'équipement électrique (230a).

14. Procédé de contrôle d'équipement selon la revendication 13,
où le système de contrôle d'équipement à commande vocale inclut en outre un dispositif d'affichage, et le message d'erreur est affiché sur le dispositif d'affichage.

15. Procédé de contrôle d'équipement selon la revendication 13,
où le système de contrôle d'équipement à commande vocale inclut en outre un dispositif de sortie vocale conçu pour délivrer un message vocal, et le message d'erreur est rapporté à l'utilisateur de l'équipement électrique (230a) en utilisant le dispositif de sortie vocale.

16. Système de contrôle d'équipement à commande vocale, comprenant :
un dispositif d'entrée vocale (210) adapté pour entrer des signaux vocaux ;
un équipement électrique (230a) adapté pour fonctionner pendant un temps de fonctionnement désigné ; et
un serveur (220) apte à être connecté au dispositif d'entrée vocale (210) et à l'équipement électrique (230a) ;
où le système de contrôle d'équipement à commande vocale est adapté pour contrôler l'équipement électrique (230a) suivant les signaux vocaux d'un utilisateur,
le dispositif d'entrée vocale (210) inclut
une unité d'acquisition de signaux vocaux (201) adaptée pour acquérir des premières informations vocales exprimant une instruction de fonctionnement indiquant à l'équipement électrique (230a) de fonctionner pendant un premier temps de fonctionnement, et des deuxièmes informations vocales, exprimant une instruction de fonctionnement indiquant à l'équipement électrique (230a) de fonctionner pendant un deuxième temps de fonctionnement différent du premier temps de fonctionnement, et
une première unité de communication (401) adaptée pour transmettre les premières informations vocales et les deuxièmes informations vocales acquises au serveur (220),
l'équipement électrique (230a) inclut
une deuxième unité de communication (404) adaptée pour recevoir en provenance du serveur une première commande de contrôle pour exécuter un premier processus de fonctionnement qui indique à l'équipement électrique (230a) de fonctionner pendant un temps de fonctionnement reconnu sur la base des premières informations vocales, et
une unité de contrôle (207) adaptée pour indiquer l'exécution du premier processus de fonctionnement indiqué par la première commande de contrôle reçue, et
le serveur (220) inclut
une troisième unité de communication (402) adaptée pour recevoir les premières informations vocales et les deuxièmes informations vocales en provenance du dispositif d'entrée vocale (210), et
une quatrième unité de communication (403) adaptée pour transmettre à l'équipement électrique (230a) la première commande de contrôle ;
**caractérisé en ce que**
l'équipement électrique (230a) inclut en outre une minuterie (206a) adaptée pour démarrer un compte du temps écoulé pendant le premier processus de fonctionnement et pour rapporter un incrément du temps écoulé selon un intervalle de rapport prescrit ;
le serveur (220) inclut en outre
une unité de stockage de temps écoulé (205a) adaptée pour stocker une valeur cumulative des incréments rapportés par la minuterie (206a) à chaque intervalle de rapport ;
une unité d'évaluation (203a) adaptée, dans un cas où des deuxièmes informations vocales, qui expriment une instruction de fonctionnement indiquant à l'équipement électrique (230a) de fonctionner pendant un deuxième temps de fonctionnement différent du premier temps de fonctionnement, sont reçues de la part d'un utilisateur via le dispositif d'entrée vocale (210) avant que le premier processus de fonctionnement ne soit achevé dans l'équipement électrique (230a), pour détecter un temps de fonctionnement écoulé de l'équipement électrique (230a) au moment de la réception des deuxièmes informations vocales sur la base de la valeur cumulative stockée dans l'unité de stockage de temps écoulé (205a), pour comparer le temps de fonctionnement écoulé détecté avec un deuxième temps de fonctionnement reconnu sur la base des deuxièmes informations vocales ; et pour évaluer lequel est plus grand, et
une cinquième unité de communication (403) adaptée, si le deuxième temps de fonctionnement est jugé plus long que le temps de fonctionnement écoulé, pour transmettre à l'équipement électrique (230a) une deuxième commande de contrôle pour interrompre le premier processus de fonctionnement et exécuter un deuxième processus de fonctionnement qui indique à l'équipement électrique (230a) de fonctionner jusqu'à ce que le temps de fonctionnement écoulé atteigne le deuxième temps de fonctionnement.
